# EUROPEAN PATENT APPLICATION

(11) **EP 4 682 136 A2**
(43) Date of publication of application: **21.01.2026**
(21) Application number: 25221004.2
(22) Date of filing: 12.10.2020
(51) Int. Cl.: C05G 3/90

(54) **INHIBITORS OF SOIL NITRIFICATION AND PROCESSES TO PREVENT SAME**

(30) Priority: 14.10.2019 US 201962914831 P; 12.02.2020 US 202062975559 P
(62) Divisional of application: 20800479.6
(71) Applicant: Tessenderlo Group NV, 1050 Brussel (BE)
(72) Inventor: OGLES, Charles Zachry, Phoenix, 85018 (US); WALLACE, Sun Young, Phoenix, 85018 (US); MUTEAU, Régis, 59120 Loos (FR)
(74) Representative: Nederlandsch Octrooibureau

(57) **Abstract**

The present invention relates to a process for inhibiting, at least in part, nitrification activity of ammonium-containing fertilizers (a1) and/or of ammonium-producing fertilizers (a2), which process comprises the steps of:
a) Applying to soil and/or to foliage a nitrification inhibitory amount of one or more compounds (b) that are selected from the group consisting of (b1) polysulfides and/or (b2) thiosulfates and/or (b3) hydrosulfides;
b) Wherein the one or more compounds (b) are applied simultaneously with, before or after the fertilizers (a) are applied to the soil and/or to the foliage such that the compounds (b) are in direct contact with the ammonium-containing fertilizers (a1) and/or the ammonium-producing fertilizers (a2);
c) Wherein the one or more nitrification inhibiting compounds (b) are applied in an amount:
i. such that the ratio (w/w) of "total protectable nitrogen" over "sulfur from compounds (b)" is at most about 8:1, preferably at most about 7.5:1, more preferably at most about 7:1, and/or
ii. corresponding to a soil level of S (sulfur) that is between about 50 and about 300 ppm, preferably between about 75 and about 300 ppm, more preferably between about 100 and about 250 ppm;
and
d) Wherein compounds (b) are different from compounds (a).

## Description

### FIELD OF THE INVENTION

The present invention relates to compositions of matter that are able to inhibit and prevent soil nitrification of ammonium containing fertilizers and ammonium producing fertilizers by using sulfur based materials that act as inhibitor and at the same time provide sulfur nutrition to crops. Materials of the invention proved to be as efficient as the gold standard, DCD (dicyandiamide), and often had longer lasting effects. The present invention further relates to methods to inhibit and prevent soil nitrification and reduce thereby negative impact on the environment.

### BACKGROUND OF THE INVENTION

Nitrogen (N) is an essential plant nutrient together with phosphorus (P) and potassium (K). However, only a small percentage of applied N is actually taken up by crops. Nitrogen use efficiency (NUE) today is thus far from being optimal. Due to these N losses, nitrogen is also a notorious pollutant. Large external inputs of N fertilizer coupled with decreasing N use efficiency (NUE) contribute to severe environmental pollution, including the degradation of downstream water quality, development of photochemical smog, and rise of global concentrations of gaseous N-oxides, known to be powerful greenhouse gases.

Most of the N fertilizers applied today to soils for agriculture production are in the form of N-NH₄⁺ (e.g. ammonium nitrate, ammonium sulfate) or NH₄⁺ compounds. Ammonium (NH₄⁺) can herein be present from the start, or NH₄⁺ can be generated along the line (as in e.g. Urea). The first type of fertilizers are referred to as "NH₄⁺-containing fertilizers", the latter as "NH₄⁺-producing fertilizers".

Urea is one of the most widely used N sources in agriculture worldwide. Solutions of UAN are widely used as a source of N for plant nutrition. They are mixtures of Urea and Ammonium Nitrate in water. In most arable soils, urea is rapidly converted to ammonia by urease enzymes. This leads to volatilization of ammonia and emission of nitrous oxides. Ammonium in soil is rapidly oxidized via chemical and biological pathways, the latter leading first to the production of nitrite (NO₂⁻) and then to nitrate (NO₃⁻). The conversion from NH₄⁺ to NO₂⁻ is done by *Nitrosomonas spp.* The ammonium oxidizing enzymes in question (that convert ammonium into nitrite) are ammonium monooxygenase (AMO) and hydroxylamine oxidoreductase (HAO). The conversion from NO₂⁻ to NO₃⁻ is done by *Nitrobacter spp* and/or by *Nitrosolobus spp.*

Nitrification happens relatively quickly and is influenced by both pH and temperature. Nitrate formed is soluble, negatively charged, mobile in soil and therefore subject to leaching. Nitrification leads to nitrogen losses by leaching and denitrification. The denitrification losses result from biological reduction of nitrite and nitrate to gaseous nitrogen forms, i.e., NOₓ and N₂ which are lost in the atmosphere. In the United States, it has been reported that approximately 25 percent of the applied fertilizer nitrogen is lost by leaching and denitrification, the actual number being dependent on soil, crop and environmental conditions.

For these reasons, controlling the processes of nitrification and of urease hydrolysis has been subject of many studies. In recent years, various urease and nitrification inhibitors have been introduced into the market, with the aim to increase N use efficiency (NUE) and to minimize impact on the environment. While both urease and nitrification inhibitors have the potential to effectively reduce N losses, it is important to note that although they are often grouped together as "inhibitors", they are chemically different and have different modes of action (J. Adv. Res. 2018, 13, 19-27). Commercial products address either urease or nitrification activity.

Amongst the most widely used urease inhibitors is NBPT (N-(n-Butyl) thiophosphoric triamide). Most widespread nitrification inhibitors are DCD (dicyandiamide) and nitrapyrin (2-chloro-6-trichloromethyl)pyridine), commercialized as N-Serve^{®} or Instinct^{®}. These chemical compounds leave residues in the ground and some of them, like nitrapyrin, are mildly toxic. For example, food safety concerns were raised around the use of DCD, which appeared as a residual contaminant in dairy products (Ir. J. Agric. Food Res. 2013, 52, 173-183).

In addition, nitrapyrin has relatively high vapor pressures, which prevents cogranulation of nitrapyrin with solid fertilizers such as urea. As such, nitrapyrin is primarily used with anhydrous ammonia and, even then, special precautions must be taken. ETT (another nitrification inhibitor on the market) has such high vapor pressure that it cannot be tank-mixed with Anhydrous Ammonia, it must be supplied simultaneously from a separate tank.

Thiosulfates readily oxidize to dithionates, trithionates, tetrathionates, and finally to sulfates:

2S₂O₃²⁻ + 3O₂ → 2S₂O₆²⁻

S₂O₆²⁻ + O₂ → 2SO₄²⁻

7S₂O₃²⁻ + 3/2O₂ → 2S₃O₆²⁻ +2S₄O₆²⁻

2S₃O₆²⁻ + 6O₂ → 6SO₄²⁻

S₄O₆²⁻ + 5O₂ → 4SO₄²⁻

Due to this transformation, thiosulfate salts (interchangeable referred to as "thiosulfates") are used as fertilizers in combination with cations such as e.g. ammonium, potassium, magnesium and calcium. The ammonium, alkali metal and alkaline earth thiosulfates are soluble in water. Water solubility of thiosulfates decreases from ammonium to alkali metals to alkaline earth thiosulfates.

Thiosulfates are also an important intermediate in microbial sulfur cycling in soils and sediments. It has been suggested that tetrathionate might be an inhibitor of soil urease by reacting with -SH groups in jackbean urease to form an S-sulpho derivative, as follows:

RSH + S₄O₆⁻² → RS-S₂O₃H + S₂O₃⁻²

RS-S₂O₃H + O₂ → RS-SO₃H + SO₂

US 7494525 describes the use of calcium polysulfides, potassium polysulfides, calcium thiosulfates and magnesium thiosulfates for inhibiting urease activity.

Ammonium thiosulfates have been reported before as weak nitrification inhibitors, see e.g. Sallade and Sims, in Plant & Soil, December 1992. And some authors have reported them as Inhibitors of Soil Urease and Nitrification, Alja Margoe et al., Agricultural Sciences 2015-6, 1502-1512. Results obtained however are contradictory, and seemed to depend heavily on the soil type.

The materials and processes of the invention aim to overcome one or more of the above problems, with a focus primarily on nitrification inhibition.

### BRIEF DESCRIPTION OF FIGURES

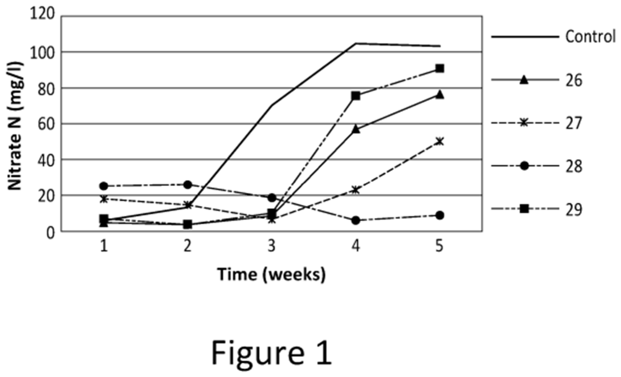

Figure 1 illustrates the nitrification inhibition effected by treatments 26-29 compared to a control as described in example 6.

### SUMMARY OF THE INVENTION

Applicant has determined that there is increasing public concern regarding health issues, environmental protection and natural resource sustainability, and a shift toward the development of environmentally friendly agricultural practices that aim to maximize nitrogen fertilizer efficiency (NUE). Further, Applicant has determined that improving the efficiency of urea-based and ammonium-based fertilizers through new technologies and management strategies is of high interest.

Aside from possible effects on food safety, it has been shown that conventional nitrification inhibitors also result in the deterioration of soil microbiome health by negatively affecting the activity and/or population size of bacteria, fungi and small invertebrates like earthworms (e.g. Environmental Chemistry Letters 8.3 (2010): 237-246). Maintaining good soil microbiome health is important for stimulating plant growth, plant resistance to biotic and abiotic stress, and the long-term ecological preservation of soils. Hence, applicant has determined that it is desirable to provide nitrification inhibitors and fertilizer compositions which do not affect soil microbiome health.

Further, Applicant has determined that there is also a demand for nitrification inhibitors that are compatible with standard liquid and solid fertilizers and that are easy to use and handle.

Applicant has also determined, especially in view of coming European regulation, that there is a growing and renewed interest in finding a solution to potential nitrogen losses, with preference for an environment-friendly solution, which is not toxic for plants and soil bacteria.

Applicant has further determined that there is an ever increasing demand for a better NUE with less N losses. There is in particular a demand for environment friendly solutions for N losses through nitrification that can compete with DCD. There is an interest in having systems and processes in use, which are nevertheless compatible with DCD and/or nitrapyrin. The farmer of course is primarily interested in solutions that are affordable, that are not toxic for nature or the environment and that provide crops with all essential nutrients at high yield.

Against this background we now provide a process for inhibiting, at least in part, nitrification activity of ammonium-containing fertilizers (a1) and/or of ammonium-producing fertilizers (a2), which process comprises the steps of:
a) Applying to soil and/or to foliage a nitrification inhibitory amount of one or more compounds (b) that are selected from the group consisting of (b1) polysulfides and/or (b2) thiosulfates and/or (b3) hydrosulfides;
b) Wherein the one or more compounds (b) are applied simultaneously with, before or after the fertilizers (a) are applied to the soil and/or to the foliage such that the compounds (b) are in direct contact with the ammonium-containing fertilizers (a1) and/or the ammonium-producing fertilizers (a2);
c) Wherein the one or more nitrification inhibiting compounds (b) are applied in an amount:
   ∘ such that the ratio (w/w) of "total protectable nitrogen" over "sulfur from compounds (b)" is at most about 8:1, preferably at most about 7.5:1, more preferably at most about 7:1, and/or
   ∘ corresponding to a soil level of S (sulfur) from compounds (b) that is at least 50 ppm, preferably at least 75 ppm, more preferably at least 100 ppm;
      and
d) Wherein compounds (b) are different from compounds (a).

In accordance with the invention this process results in elimination or at least a substantial reduction of nitrification activity of said ammonium-containing fertilizers (a1) and/or of said ammonium-producing fertilizers (a2). Hence, in embodiments there is provided a process for inhibiting, at least in part, nitrification activity of ammonium-containing fertilizers (a1) and/or of ammonium-producing fertilizers (a2), which process comprises the steps of:
e) Applying to soil and/or to foliage a nitrification inhibitory amount of one or more compounds (b) that are selected from the group consisting of (b1) polysulfides and/or (b2) thiosulfates and/or (b3) hydrosulfides;
f) Wherein the one or more compounds (b) are applied simultaneously with, before or after the fertilizers (a) are applied to the soil and/or to the foliage such that the compounds (b) are in direct contact with the ammonium-containing fertilizers (a1) and/or the ammonium-producing fertilizers (a2);
g) Wherein the one or more nitrification inhibiting compounds (b) are applied in an amount:
   ∘ such that the ratio (w/w) of "total protectable nitrogen" over "sulfur from compounds (b)" is at most about 8:1, preferably at most about 7.5:1, more preferably at most about 7:1, and/or
   ∘ corresponding to a soil level of S (sulfur) from compounds (b) that is at least 50 ppm, preferably at least 75 ppm, more preferably at least 100 ppm;
h) Wherein compounds (b) are different from compounds (a); and
i) This resulting in elimination or at least a substantial reduction of nitrification activity of said ammonium-containing fertilizers (a1) and/or of said ammonium-producing fertilizers (a2).

The present inventors have found through extensive research and field trials that the nitrification inhibition effected by compounds (b) according to the method of the present invention significantly varies depending on the application mode. Notably, it was found that the nitrification inhibition effect achieved in conventional fertilization applications is low and does not nearly exploit the full potential of nitrification inhibition exerted by compounds (b). The present inventors discovered that the nitrification inhibition effected by compounds (b) follows a non-linear relationship with regard to (i) the relative amounts of fertilizers (a) and compounds (b) employed, and (ii) the absolute concentration of S in the soil. In particular it was found that at the protectable N:S ratios and absolute soil concentrations of S described herein, a large and unexpected increase in nitrification inhibition can be achieved compared to conventional application levels. Without wishing to be bound by any theory it is postulated that the nitrification inhibition achieved by the methods and uses according to the present invention reaches a plateau and may not be significantly improved by further decreasing the ratio of N:S or increasing the concentration of S in the soil.

Processes and compositions of the invention in particular inhibit or prevent the biological oxidation of ammonium nitrogen to nitrite nitrogen (first step of the nitrification process). This has the advantage that no toxic amounts of nitrite form unlike reported before for ammonium thiosulfate. An indirect consequence is that practically no nitrite will be available for further oxidation to nitrate (second step of the nitrification process also impaired). Hence, the entire nitrification process can be blocked by a process or composition of the invention. Processes and compositions of the invention are capable of preventing or inhibiting nitrification at least in part, preferably entirely.

The invention thus provides for easy-to-handle and simple-to-use processes and systems that effectively control and stop nitrification using compounds that are known not to be toxic for plants and for soil bacteria.

Compounds (b) in the amounts as indicated are compatible with both solid and liquid fertilizers (a) used today. Compounds (b), in the amounts as indicated, are further also compatible with urease and/or nitrification inhibitors on the market such as NBPT and DCD.

Processes and compositions of the invention can be used in fields where wheat, corn, vegetables, fruits, citrus, nuts crops, turfgrass, etc. grow (a whole variety of crops). Processes and compositions of the invention further seem to be compatible with standard arable soils.

A process of the invention as described herein can further comprise a step of applying commercial nitrification (c1) and/or urease inhibitors (c2) such as DCD and/or NBPT. This was not a given, as in the processes and compositions of the invention much higher amounts of compounds (b) are used than what is standard today. In the context of the invention, compounds (c) are different from compounds (b).

Processes and compositions of the invention have the advantage that the use of commercial nitrification inhibitors (c1) like DCD can be reduced or even omitted, because the processes and compositions of the invention provide a high enough NUE (nitrogen use efficiency). This makes the processes and compositions of the invention attractive to the farmer: NUE is improved, the plants get extra nutrients in the form of sulfur and this at an attractive price. Furthermore, soil microbiome health for example as measured by the activity and/or population size of bacteria, fungi and small invertebrates like earthworms is not (substantially) negatively affected. Maintaining good soil microbiome health is important for stimulating plant growth, plant resistance to biotic and abiotic stress, and the long-term ecological preservation of soils.

Because the nitrification process is slowed down, by default, emissions of NOₓ gases into the environment through denitrification are reduced too. If you do not allow the NH₄ + to be converted into NO₂⁻ or NO₃⁻ you will stop this process before it can start.

With processes and compositions of the invention the farmer is aided at meeting the increased worldwide regulatory requirements, for example, recent regulatory requirements in Europe urging the farmer to protect urea and to start using lower amounts of nitrogen per hectare.

As mentioned earlier, an important advantage of the processes, compositions and uses of the invention, is that they have been found not to affect soil microbiome health at the levels used to achieve good nitrification inhibition, even if relatively high amounts of sulfur containing compound (b) is used. As is shown in the appended examples: (i) the total microbial biomass present in soil remains unchanged before and after treatment according to the invention; (ii) the total urease enzyme present in soil remains unchanged before and after treatment according to the invention; and (iii) no effect on earthworm health was found after treatment according to the invention, even after extremely high thiosulfate concentrations simulating a spillage.

Hence, according to preferred embodiments of the invention, the process described herein is provided wherein the soil health, preferably soil microbiome health is maintained or not significantly negatively influenced, preferably wherein:
- The total microbial biomass as determined 6 weeks after application of the compounds (b) to the soil and/or the foliage is maintained or not significantly negatively influenced, preferably the total microbial biomass as determined 6 weeks after application of the compounds (b) is more than 70%, preferably more than 80%, more preferably more than 90% of the total microbial biomass compared to a control plot which was not treated with any of compounds (a) and (b) but otherwise submitted to identical treatment; and/or
- The total amount of active urease enzyme as determined 6 weeks after application of the compounds (b) to the soil and/or the foliage is maintained or not significantly negatively influenced, preferably the total amount of active urease enzyme as determined 6 weeks after application of the compounds (b) is more than 70%, preferably more than 80%, more preferably more than 90% of the total amount of active urease enzyme compared to a control plot which was not treated with any of compounds (a) and (b) but otherwise submitted to identical treatment; and/or
- The total number of earthworms is maintained or not significantly negatively influenced, preferably total number of earthworms as determined 6 weeks after application of the compounds (b) is more than 70%, preferably more than 80%, more preferably more than 90% of the total number of earthworms compared to a control plot which was not treated with any of compounds (a) and (b) but otherwise submitted to identical treatment;
more preferably wherein:
- The total microbial biomass as determined 6 weeks after application of the compounds (b) to the soil and/or the foliage is 70-130%, preferably 80-120%, more preferably 90-110% of the total microbial biomass compared to a control plot which was not treated with any of compounds (a) and (b) but otherwise submitted to identical treatment; and/or
- The total amount of active urease enzyme as determined 6 weeks after application of the compounds (b) to the soil and/or the foliage is 70-130%, preferably 80-120%, more preferably 90-110% of the total amount of active urease enzyme compared to a control plot which was not treated with any of compounds (a) and (b) but otherwise submitted to identical treatment; and/or
- The total number of earthworms as determined 6 weeks after application of the compounds (b) is 70-130%, preferably 80-120%, more preferably 90-110% of the total number of earthworms compared to a control plot which was not treated with any of compounds (a) and (b) but otherwise submitted to identical treatment.
The total microbial biomass and total amount of active urease enzyme is preferably determined using a soil sample taken from the top 0-2mm of soil.

Also envisaged in the context of the present invention are fertilizer compositions that, at least partially, are protected against N losses through nitrification. Hence, in another aspect of the invention there is provided a protected fertilizer composition comprising:
- One or more ammonium-containing fertilizers (a1) and/or one or more ammonium-producing fertilizers (a2),
- One or more nitrification inhibiting compounds (b) that are selected from the group consisting of (b1) polysulfides and/or (b2) thiosulfates and/or (b3) hydrosulfides,
- Wherein the ratio of "total protectable nitrogen" over "sulfur from compounds (b)" is at most about 8:1, preferably at most about 7.5:1, more preferably at most about 7:1, and
- Wherein the amount of nitrification inhibiting compounds (b) preferably is at least about 13 wt%, and wherein the amount of compounds (a) preferably is at least about 40 wt%, this relative to the total weight of the composition, including water. For ammonium thiosulfates (b2), the amount preferably is at least about 14, 15, 16, 17, 18, 19, or 20 wt% relative to the total weight of the composition, including water. In some embodiments the amount of nitrification inhibiting compounds (b) is at least about 13 wt%, preferably at least about 20 wt.% relative to the total weight of the composition, excluding water, and the amount of compounds (a) is at least about 40 wt%, relative to the total weight of the composition, excluding water.

Compounds (b) typically are different from compounds (a) and are different from compounds (c) that can be added. Optionally, compositions of the invention may further comprise one or more nitrification (c1) and/or urease (c2) inhibitors different from compounds (b).

In one embodiment of the invention, compositions of the invention comprise no compounds (c), like DCD, nitrapyrin or NPBT. In a particular embodiment of the invention, compositions of the invention comprise no compounds (c1), in particular comprise no nitrapyrin and no DCD. This embodiment is preferred, as the use of compounds (c) may have negative effects on the soil microbiome health. However in embodiments wherein compounds (c) are employed, their dosage can be significantly lowered thereby at least partially mitigating any negative effects on the soil microbiome. As is shown in the appended examples, by employing processes, compositions and uses as described herein, the amount of DCD can be lowered by 75% while still achieving similar nitrification inhibition for at least three weeks as a conventional amount of DCD.

Hence, in another embodiment of the invention, compositions of the invention do comprise one or more compounds (c). In one embodiment of the invention, compositions of the invention comprise one or more compounds (c1). In another embodiment they comprise one or more compounds (c2), and in yet another embodiment they comprise both compounds (c1) and (c2).

Practically no compounds (c1) are needed: the addition of, e.g., DCD did not further reduce nitrification levels for most treatments according to the invention. Thus, the use of compounds (b) according to the present invention allows a significant reduction or complete elimination of the amount of inhibitors such as DCD required to achieve a predetermined nitrification inhibition. In yet another particular embodiment, which is preferred, the composition of the invention is substantially free from DCD, nitrapyrin and NBPT.

Compositions, methods and uses of the invention allow to keep the "nitrate levels" (measured as nitrite+nitrate levels) in the soil below about 200, 150 ppm, below about 100, 90, 80, 70 ppm, even below about 60, 50 ppm, for example when measured three weeks after application of the fertilizers (a). With unprotected urea, "nitrate levels" after 8 weeks reached a level of about 300 ppm and more.

The compounds (b) or the compositions of the invention can be used for one or more of the following purposes:
- To improve nitrogen use efficiency (NUE) by at least 5, 10, 15 or 20%,
- To slow down the nitrification process in soils,
- To inhibit the first steps of the nitrification process whereby ammonium nitrogen is converted to nitrite nitrogen,
- To keep the nitrite level in the soil below a level that is phytotoxic,
- To provide nitrification inhibition in ecologically fragile soils,
- To provide nitrification inhibition with a low ecological impact
- To reduce the amount of commercial nitrification inhibitors like DCD and nitrapyrin. Such compounds are often expensive and not per se compatible with all kinds of fertilizers.

An advantage of processes and compositions of the invention, is that they can be used in and on a variety of soil systems (loam, sand, loamy sand, ...). Important also is that these processes and compositions appear to be as efficient in slowing down nitrification as the gold standard DCD.

Another aspect of the present invention is directed at the use of one or more compounds (b) that are selected from the group consisting of (b1) polysulfides and/or (b2) thiosulfates and/or (b3) hydrosulfides as described herein, preferably the use of thiosulfates as a nitrification inhibitor. Preferred thiosulfates in the context of the present invention and in particular for the uses described herein are ammonium thiosulfate, calcium thiosulfate, potassium thiosulfate and combinations thereof.

In preferred embodiments there is provided the use of one or more compounds (b) that are selected from the group consisting of (b1) polysulfides and/or (b2) thiosulfates and/or (b3) hydrosulfides, preferably selected from the group consisting of thiosulfates, preferably selected from the group consisting of ammonium thiosulfate, calcium thiosulfate, potassium thiosulfate and combinations thereof as a nitrification inhibitor wherein the soil health, preferably the soil microbiome health is maintained or not significantly negatively influenced, preferably wherein:
- The total microbial biomass as determined 6 weeks after application of the compounds (b) to the soil and/or the foliage is maintained or not significantly negatively influenced, preferably the total microbial biomass as determined 6 weeks after application of the compounds (b) is more than 70%, preferably more than 80%, more preferably more than 90% of the total microbial biomass compared to a control plot which was not treated with any of compounds (a) and (b) but otherwise submitted to identical treatment; and/or
- The total amount of active urease enzyme as determined 6 weeks after application of the compounds (b) to the soil and/or the foliage is maintained or not significantly negatively influenced, preferably the total amount of active urease enzyme as determined 6 weeks after application of the compounds (b) is more than 70%, preferably more than 80%, more preferably more than 90% of the total amount of active urease enzyme compared to a control plot which was not treated with any of compounds (a) and (b) but otherwise submitted to identical treatment; and/or
- The total number of earthworms is maintained or not significantly negatively influenced, preferably total number of earthworms as determined 6 weeks after application of the compounds (b) is more than 70%, preferably more than 80%, more preferably more than 90% of the total number of earthworms compared to a control plot which was not treated with any of compounds (a) and (b) but otherwise submitted to identical treatment;
more preferably wherein:
- The total microbial biomass as determined 6 weeks after application of the compounds (b) to the soil and/or the foliage is 70-130%, preferably 80-120%, more preferably 90-110% of the total microbial biomass compared to a control plot which was not treated with any of compounds (a) and (b) but otherwise submitted to identical treatment; and/or
- The total amount of active urease enzyme as determined 6 weeks after application of the compounds (b) to the soil and/or the foliage is 70-130%, preferably 80-120%, more preferably 90-110% of the total amount of active urease enzyme compared to a control plot which was not treated with any of compounds (a) and (b) but otherwise submitted to identical treatment; and/or
- The total number of earthworms as determined 6 weeks after application of the compounds (b) is 70-130%, preferably 80-120%, more preferably 90-110% of the total number of earthworms compared to a control plot which was not treated with any of compounds (a) and (b) but otherwise submitted to identical treatment.

As will be understood by the skilled person the embodiments of the invention explained in the context of the process of the invention are equally applicable to the use of one or more compounds (b) that are selected from the group consisting of (b1) polysulfides and/or (b2) thiosulfates and/or (b3) hydrosulfides, preferably to the use of thiosulfates as a nitrification inhibitor. Particularly preferred uses are the following, next to the preferred uses described further below.
The use of one or more compounds (b) that are selected from the group consisting of (b1) polysulfides and/or (b2) thiosulfates and/or (b3) hydrosulfides as described herein, preferably selected from the group consisting of thiosulfates, preferably selected from the group consisting of ammonium thiosulfate, calcium thiosulfate, potassium thiosulfate and combinations thereof as nitrification inhibitor wherein the soil health, preferably soil microbiome health is maintained or not significantly negatively influenced, preferably wherein:
- The total microbial biomass as determined 6 weeks after application of the compounds (b) to the soil and/or the foliage is maintained or not significantly negatively influenced, preferably the total microbial biomass as determined 6 weeks after application of the compounds (b) is 70-130%, preferably 80-120%, more preferably 90-110% of the total microbial biomass compared to a control plot which was not treated with any of compounds (a) and (b) but otherwise submitted to identical treatment;
- The total amount of active urease enzyme as determined 6 weeks after application of the compounds (b) to the soil and/or the foliage is maintained or not significantly negatively influenced, preferably the total amount of active urease enzyme as determined 6 weeks after application of the compounds (b) is 70-130%, preferably 80-120%, more preferably 90-110% of the total amount of active urease enzyme compared to a control plot which was not treated with any of compounds (a) and (b) but otherwise submitted to identical treatment; and/or
- The total number of earthworms is maintained or not significantly negatively influenced, preferably total number of earthworms as determined 6 weeks after application of the compounds (b) is 70-130%, preferably 80-120%, more preferably 90-110% of the total number of earthworms compared to a control plot which was not treated with any of compounds (a) and (b) but otherwise submitted to identical treatment;
wherein said use comprises
j) Applying to soil and/or to foliage a nitrification inhibitory amount of one or more compounds (b) that are selected from the group consisting of (b1) polysulfides and/or (b2) thiosulfates and/or (b3) hydrosulfides, preferably selected from the group consisting of thiosulfates, preferably selected from the group consisting of ammonium thiosulfate, calcium thiosulfate, potassium thiosulfate and combinations thereof;
k) Wherein the one or more compounds (b) are applied simultaneously with, before or after the fertilizers (a) are applied to the soil and/or to the foliage such that the compounds (b) are in direct contact with the ammonium-containing fertilizers (a1) and/or the ammonium-producing fertilizers (a2);
l) Wherein the one or more nitrification inhibiting compounds (b) are applied in an amount:
   ∘ such that the ratio (w/w) of "total protectable nitrogen" over "sulfur from compounds (b)" is at most about 8:1, preferably at most about 7.5:1, more preferably at most about 7:1, and/or
   ∘ corresponding to a soil level of S (sulfur) that is at least 50 ppm, preferably at least 75 ppm, more preferably at least 100 ppm;
      and
m)Wherein compounds (b) are different from compounds (a).

### DEFINITIONS

"Protectable nitrogen" [or "Prot N"] is nitrogen that is not already in the nitrate-form. This includes primarily urea, ammonium, and other non-nitrate N sources. Amounts of nitrate are not to be taken into account herein, as this is not a nitrogen source that is to be protected from nitrification.

"Total Prot N" stands for the total amount (mass) of protectable nitrogen available from (a) and (b). In the Examples Section, some examples of "Total Prot N:S" ratio calculations are shown, wherein "S" stands for sulfur (mass). As demonstrated in the appended examples, the present inventors have found that it is, *inter alia* the amount (mass) of sulfur (S) from compounds (b) relative to the amount (mass) of protectable nitrogen that is important for an efficient nitrification inhibition.

By an "ammonium-containing fertilizer" (a1) is meant a fertilizer that contains ammonium-nitrogen (NH₄⁺) as such. Examples of such fertilizer are for instance UAN, Ammonium Nitrate, Ammonium Phosphate, Ammonium Sulfate, Ammonium Thiosulfate, etc. By an "ammonium-producing fertilizer" (a2) is meant a fertilizer that generates ammonium after contact with soil bacteria and with NH₄⁺-producing enzymes in particular such as AMO and HAO.

As will be understood by the skilled person, with the expression "inhibiting nitrification activity of ammonium-containing fertilizers (a1) and/or of ammonium-producing fertilizers (a2)" is meant inhibiting the microbial and/or chemical processes which result in the conversion of ammonium to nitrate, typically via nitrite, which processes naturally take place after application of the fertilizer to the soil and/or foliage. By a "substantial reduction" is meant that the nitrification rate is reduced by at least about 5, 6, 7, 8, or 9%, more preferably by at least about 10, 11, 12, 13, 14, or 15% or more, more preferably about 40, 50, 60, 70, or 80% or more compared to a control without nitrification inhibitors, for example when determined over the first three weeks after application of the fertilizers (a). With processes and compositions of the invention, nitrification can be inhibited by at least about 40, 50, 60, 70, 80%, even about 90% or more for example when determined over the first three weeks after application of the fertilizers (a). Processes and compositions of the invention even can block nitrification entirely, for example when determined over the first three weeks after application of the fertilizers (a). Typically no to almost no nitrate is being formed, for example when determined over the first three weeks after application of the fertilizers (a).

All ppm levels used herein are ppm (w/w) (which is equivalent to mg/kg, e.g. a concentration of 1 ppm = 1 mg/kg) unless expressly indicated otherwise.

The amount of sulfur (S) from compounds (b) in ppm is thus the mass of sulfur (S) from compounds (b) per mass of soil. It will be understood by the skilled person that the methods and uses of the invention specifying a soil level (S) of sulfur concern the sulfur (S) applied in the form of compounds (b) excluding sulfur from other sources than compounds (b). While the skilled person can routinely measure the concentration of sulfur (S) in the soil before and after application of compounds (b) and thus establish the amount of sulfur (S) from compounds (b) in the soil, a more practical approach is to simply calculate the amount of sulfur (S) from compounds (b). As is common in the field of agriculture, this may be done using a standardized approximation based on the total volume of soil treated with compounds (b) assuming a soil having a density of 1.25 kg/l, regardless of the actual soil conditions. The volume treated for a surface application such as broadcasting (surface or incorporated), fertigation, or band application can easily be calculated based on the actual surface treated and assuming homogeneous distribution through the top 0-10 cm layer of soil. The actual surface treated is typically the whole field for broadcasting and spray fertigation (i.e. 1 hectare of surface treated per hectare of field) while it is typically only a portion of the field for a banded application (the actual surface treated depending on band width). For drip fertigation a band width of 5 cm can be assumed.
The volume treated for an injection application (such as a 2"x2" starter for corn) can easily be calculated assuming for each injection row a homogenous distribution through a cylinder of soil with a diameter of 5 cm and a length equal to the treated row length. For illustration purposes, the following examples are given:
A. Applying 150 kg S from compounds (b) to 1 hectare of soil in a broadcast application (with or without working into the soil) amounts to treating 1 hectare of soil which according to the above method is approximated to represent 1250000 kg of soil treated, and thus a soil level of 120 ppm S from compounds (b).
B. Applying 10 kg S from compounds (b) to 1 hectare of soil in a localized band application of 200 rows of 100 m length and a band width of 5 cm amounts to treating 1000 m² or 0.1 hectare of soil which according to the above method is approximated to represent 125000 kg of soil treated and thus a soil level of 80 ppm S from compounds (b).
C. Applying 150 kg S from compounds (b) to 1 hectare of soil in a spray fertigation application amounts to treating 1 hectare of soil which according to the above method is approximated to represent 1250000 kg of soil treated, and thus a soil level of 120 ppm S from compounds (b).
D. Applying 18 kg S from compounds (b) to 1 hectare of soil in a banded injection application with a row spacing of 76 cm and a row length of 13,12m is approximated according to the above method to represent treatment of 25,747,326 cm³ of soil and thus a soil level of 560 ppm S from compounds (b).
E. Applying 10 kg S from compounds (b) to 1 hectare of soil in a drip fertigation application of 200 rows of 100 m length is approximated to treating 1000 m² or 0.1 hectare of soil (assuming 5 cm band width as explained above) which according to the above method is approximated to represent 125000 kg of soil treated and thus a soil level of 80 ppm S from compounds (b).
Thus, in accordance with preferred embodiments of the methods and uses described herein the soil level of S (sulfur) from compounds (b) is calculated based on the total volume of soil treated with compounds (b) assuming a soil having a density of 1.25 kg/l, regardless of the actual soil conditions. Preferably, the total volume of soil treated is approximated as follows:
- for a surface application such as broadcasting (surface or incorporated), fertigation, or band application: based on the actual surface treated and assuming homogeneous distribution through the top 0-10 cm layer of soil; and
- for an injection application assuming for each injection row a homogenous distribution through a cylinder of soil with a diameter of 5 cm and a length equal to the treated row length.
Preferably the total volume of soil treated is approximated as described above wherein the actual surface treated:
- is considered as the whole field for broadcasting and spray fertigation (i.e. 1 hectare of surface treated per hectare of field);
- is calculated using the band width for a banded application; and
- is calculated assuming a band width of 5 cm for drip fertigation application.

By the expression "wherein the soil health, preferably the soil microbiome health is maintained or not significantly negatively influenced" as used herein is preferably meant that the value of the soil health as measured by a predetermined parameter is within 70-130% compared to a control plot which was not treated with compound (b), preferably not treated with any of compounds (a) and (b) but otherwise submitted to identical treatment.

In the context of the present invention, as in common in agriculture, the expression 'liquid form' as employed in the context of fertilizers (a) or compounds (b) is meant to encompass solutions (typically aqueous solutions) of a fertilizer (a) or compound (b). For example, Thio-Sul^{®} is a commercially available solution of ammonium thiosulfate in water, and hence to be construed as a liquid form of a compound (b).

### DETAILED DESCRIPTION

A first aspect of the invention relates to a process for inhibiting, at least in part, nitrification activity of ammonium-containing fertilizers (a1) and/or of ammonium-producing fertilizers (a2), which process comprises the steps of:
n) Applying to soil and/or to foliage a nitrification inhibitory amount of one or more compounds (b) that are selected from the group consisting of (b1) polysulfides and/or (b2) thiosulfates and/or (b3) hydrosulfides;
o) Wherein the one or more compounds (b) are applied simultaneously with, before or after the fertilizers (a) are applied to the soil and/or to the foliage such that the compounds (b) are in direct contact with the ammonium-containing fertilizers (a1) and/or the ammonium-producing fertilizers (a2);
p) Wherein the one or more nitrification inhibiting compounds (b) are applied in an amount:
   ∘such that the ratio (w/w) of "total protectable nitrogen" over "sulfur from compounds (b)" is at most about 8:1, preferably at most about 7.5:1, more preferably at most about 7:1, and/or
   ∘ corresponding to a soil level of S (sulfur) that is at least 50 ppm, preferably at least 75 ppm, more preferably at least 100 ppm;
      and
q) Wherein compounds (b) are different from compounds (a).
In accordance with the invention this process results in elimination or at least a substantial reduction of nitrification activity of said ammonium-containing fertilizers (a1) and/or of said ammonium-producing fertilizers (a2).

As will be apparent to the skilled person in light of the present disclosure, it is preferred that the one or more nitrification inhibiting compounds (b) are applied in an amount:
∘ such that the ratio (w/w) of "total protectable nitrogen" over "sulfur from compounds (b)" is at most about 8:1, preferably at most about 7.5:1, more preferably at most about 7:1, and
∘ corresponding to a soil level of S (sulfur) that is at least 50 ppm, preferably at least 75 ppm, more preferably at least 100 ppm.

In practice application such that the compounds (b) are in direct contact with the fertilizers (a) is easily performed by simply applying the fertilizers (a) and the one or more compounds (b) to the same soil and/or foliage. This may be done in any order or simultaneously. Hence, in embodiments the method comprises the following step:
r) Applying the ammonium-containing fertilizers (a1) and/or the ammonium-producing fertilizers (a2) simultaneously with, before or after the one or more compounds (b) to the same soil and/or to the same foliage.
In preferred embodiments of the method according to the invention, the fertilizers (a) and the one or more compounds (b) are applied to the same soil and/or foliage within 5 days, preferably 3 days, more preferably 24 hours, most preferably within 12 hours. Accordingly, the ratio of "total protectable nitrogen" over "sulfur from compounds (b)" is preferably calculated taking into account the total amount of fertilizers (a) and compounds (b) applied to the same soil and/or to the same foliage within a timeframe of 5 days, preferably 3 days, more preferably 24 hours, most preferably within 12 hours.

Typically processes and compositions of the invention reduce "nitrate levels" (measured as nitrite+nitrate levels) in the soil to below about 200, 150 ppm, below about 100, 90, 80, 70 ppm, even below about 60, 50 ppm, for example when measured three weeks after application of the fertilizers (a). With conventional fertilization methods, such as when applying unprotected urea, "nitrate levels" after 8 weeks reach a level of 300 ppm and more.

In a preferred embodiment of the present invention, sufficient compound (b) is provided in order to result in a combined amount of nitrite and nitrate of about 200 ppm or lower, preferably about 150 ppm or lower, and even more preferably below 100 ppm, wherein the combined amount of nitrite and nitrate is determined three weeks after application of the fertilizers (a).

It is believed that processes and compositions of the invention affect, in particular primarily affect, the initial steps of nitrification from ammonium to nitrite.

Hence, in embodiments of the invention the process for inhibiting, at least in part, nitrification activity of ammonium-containing fertilizers (a1) and/or of ammonium-producing fertilizers (a2) as described herein is provided in the form of a process for inhibiting, at least in part, the first steps of the nitrification process whereby ammonium is converted to nitrite. According to embodiments of the invention there is provided a process for inhibiting, at least in part, nitrification activity of ammonium-containing fertilizers (a1) and/or of ammonium-producing fertilizers (a2) as described herein comprising inhibiting, at least in part, the first steps of the nitrification process whereby ammonium is converted to nitrite, which process comprises the steps of:
s) Applying to the soil and/or to foliage a nitrification inhibitory amount of one or more compounds (b) that are selected from the group consisting of (b1) polysulfides and/or (b2) thiosulfates and/or (b3) hydrosulfides;
t) Wherein the one or more compounds (b) are applied simultaneously with, before or after the fertilizers (a) are applied to the soil and/or to the foliage such that the compounds (b) are in direct contact with the ammonium-containing fertilizers (a1) and/or the ammonium-producing fertilizers (a2);
u) Wherein the one or more nitrification inhibiting compounds (b) are applied in an amount:
   ∘ such that the ratio (w/w) of "total protectable nitrogen" over "sulfur from compounds (b)" is at most about 8:1, preferably at most about 7.5:1, more preferably at most about 7:1, and/or
   ∘ corresponding to a soil level of S (sulfur) that is at least 50 ppm, preferably at least 75 ppm, more preferably at least 100 ppm;
      and
v) Wherein compounds (b) are different from compounds (a).
In accordance with embodiments of the invention this process results in an inhibition or impairment, at least in part, of the first steps of the nitrification process whereby ammonium is converted to nitrite.

Possibly also the second steps of the nitrification process, whereby nitrite is converted to nitrate, is affected. It is thought that indirectly, both the first and second steps of the nitrification process are inhibited, at least in part.

Hence, in preferred embodiments of the invention the process for inhibiting, at least in part, nitrification activity of ammonium-containing fertilizers (a1) and/or of ammonium-producing fertilizers (a2) as described herein is provided in the form of a process for inhibiting, at least in part, (i) the first steps of the nitrification process whereby ammonium is converted to nitrite and/or (ii) the second steps of the nitrification process whereby nitrite is converted to nitrate. According to preferred embodiments of the invention there is provided a process for inhibiting, at least in part, nitrification activity of ammonium-containing fertilizers

(a1) and/or of ammonium-producing fertilizers (a2) as described herein comprising inhibiting, at least in part, (i) the first steps of the nitrification process whereby ammonium is converted to nitrite and/or (ii) the second steps of the nitrification process whereby nitrite is converted to nitrate, which process comprises the steps of:
w) Applying to the soil and/or to foliage a nitrification inhibitory amount of one or more compounds (b) that are selected from the group consisting of (b1) polysulfides and/or (b2) thiosulfates and/or (b3) hydrosulfides;
x) Wherein the one or more compounds (b) are applied simultaneously with, before or after the fertilizers (a) are applied to the soil and/or to the foliage such that the compounds (b) are in direct contact with the ammonium-containing fertilizers (a1) and/or the ammonium-producing fertilizers (a2);
y) Wherein the one or more nitrification inhibiting compounds (b) are applied in an amount:
   ∘ such that the ratio (w/w) of "total protectable nitrogen" over "sulfur from compounds (b)" is at most about 8:1, preferably at most about 7.5:1, more preferably at most about 7:1, and/or
   ∘ corresponding to a soil level of S (sulfur) that is at least 50 ppm, preferably at least 75 ppm, more preferably at least 100 ppm;
      and
z) Wherein compounds (b) are different from compounds (a).
In accordance with preferred embodiments of the invention this process results in an inhibition or impairment, at least in part, of the first steps of the nitrification process whereby ammonium is converted to nitrite and/or of the second steps of the nitrification process whereby nitrite is converted to nitrate.

As explained herein elsewhere a significant reduction of nitrification is expected when a critical level of compounds (b) - like thiosulfates (b2) and/or polysulfides (b1) - is reached in the soil. In this case, nitrification is substantially reduced or even stops. This effect is thought to be independent of the nitrogen rate, and would be observed too when applying much higher nitrogen rates than are usual. The present invention allows the application of higher levels of nitrogen, as long as the critical amount of compounds (b) such as thiosulfates or polysulfides is respected and these compounds are applied in conjunction with the nitrogen fertilizer.

The present inventors have found that to inhibit at least in part nitrification activity, a critical level of S provided by the one or more nitrification inhibiting compounds (b) is to be reached in the soil of at least 50 ppm, preferably at least 75 ppm, more preferably at least 100 ppm. The maximum level of S from compounds (b) in the soil is not particularly limited. As is illustrated in the examples, even at extremely elevated concentrations simulating a spillage, no negative effect on soil health was found. Especially in the context of localized application, soil levels of S from compounds (b) may be relatively high, e.g. more than 200 ppm or more than 500 ppm. Most normal methods and uses according to the invention will not require extremely high ppm levels. Hence, it is preferred to apply compounds (b) in the methods and uses described herein in an amount that corresponds to providing a soil level of S (sulfur) of less than 3000 ppm, preferably less than 1500 ppm, more preferably less than 750 ppm. Preferably the soil levels of sulfur (S) from compounds (b) are calculated using the approximation method described before.

In particular embodiments the level of S provided by the one or more nitrification inhibiting compounds (b) is between about 50 and about 300 ppm, preferably between about 75 and about 300 ppm. For this reason, it is preferred to apply compounds (b) as indicated in an amount that corresponds to providing a soil level of S (sulfur) from about 50 to about 300 ppm to the soil, preferably from about 75 to about 300 ppm, more preferably from about 100 to about 250 ppm. Preferably the minimal amount of S provided is at least about 80, 85, or 90 ppm, more preferably this amount is at least about 95, or 100 ppm. Often no more than about 290, 285, 280, 275, 270, 265, 260, 255 or 250 ppm is needed to inhibit nitrification, at least in part. In general, one can say that from about 100 to about 250 ppm suffices. Hence, in some embodiments of the invention, the one or more nitrification inhibiting compounds (b) are applied in an amount corresponding to a soil level of S (sulfur) that is between about 100 ppm and about 250 ppm, typically between about 100 ppm and about 240 ppm. Preferably the soil levels of sulfur (S) from compounds (b) are calculated using the approximation method described before.

It is assumed that application to foliage will indirectly result in application to the soil (due to washing off during application, under the influence of condensation and/or under the influence of rain) and it is within the routine capabilities of the skilled person to select foliar application methods (nozzles, flow rates, volumes), such as flowing solution application, which result in nitrification inhibition according to the methods described herein. However in general, application of fertilizers (a) and compounds (b) directly to the soil is preferred. Direct application to the soil encompasses any conventional means of applying fertilizer (a) and/or compounds (b) which is not specifically targeted at application to the foliage, such as broadcasting (with or without working into the soil), localized placement (e.g. band, hole, half circle), and/or via irrigation.

A preferred process according to the invention comprises applying and/or incorporating compounds (b) - like thiosulfates (b2) and/or polysulfides (b1) - into the top few inches of soil through mechanical methods and/or via irrigation. The shallower the depth of incorporation, the lower the amount of sulfur due. Tillage at a level of 6 inches (15.2 cm) will require more sulfur to achieve the same soil S levels and thus level of nitrification inhibition than would a tilling depth of 1 inch. It is within the routine capabilities of the skilled person, in light of the present disclosure, to determine the appropriate dosage and application method to achieve the soil level of S (sulfur) prescribed by the present invention.

The present inventors observed the highest levels of nitrification inhibition at S-levels of about 237 ppm but still saw significant effects down to about 108 ppm. Levels below the about 108 ppm level still showed effect but less pronounced. Additional benefits above about 237 ppm are not expected for standard applications as nitrification was found to have stopped at this rate. It is possible that a longer duration of inhibition is obtained with higher rates.

When compounds (b) in conjunction with compounds (a) are applied in a band (as with a fertilizer knifing rig or as a 2x2 starter in corn) that is only an inch or so wide, the concentration in the retention zone would be extremely high and likely have a pronounced effect on nitrification. In said case, in view of the localized application lower absolute amounts of sulfur (S) are expected to suffice. For such localized applications, it is expected that the soil levels of sulfur (S) from compounds (b) calculated according to the preferred approximation method described herein will be more than 50 ppm as described throughout this application.

Similarly, in a broadcast application to the soil, the concentration on the soil surface would be very high and would significantly reduce nitrification. This would also have an effect on reducing leaching after rainfall. This could be an important factor in turfgrass since all fertilizer is then applied to the surface, and not typically mechanically incorporated. It is common for fertilizer to be irrigated with about ¼- ½ inch of water after application to move the fertilizer off the leaf tissue and into the soil.

The above gives an idea of the amounts of compounds (b) to use in compositions of the invention in order to reach the desired effect.

In an embodiment of the invention, the fertilizer (a) is selected from one or more ammonium-containing fertilizers. In another embodiment of the invention, the fertilizer (a) is selected from one or more ammonium-producing fertilizers. Possibly a mixture of both urea-containing and urea-producing fertilizers (a) is used.

Examples of "Ammonium-containing fertilizers (a1)" include but are not limited to UAN (Urea Ammonium Nitrate); Ammonium Nitrate; Calcium Ammonium Nitrate; Ammonium Hydroxide; Ammonium Phosphates such as Mono Ammonium Phosphate, Di Ammonium Phosphate, Ammonium Polyphosphate, Ammonium Phosphate Sulfate, Ammonium Phosphate Sulfate Nitrate, Urea Ammonium Phosphate; Ammonium Sulfate; Ammonium Thiosulfate; Anhydrous Ammonia; Liquid Ammonia; and mixtures thereof (of any of these). "Ammonium-producing fertilizers (a2)" would include most organic (carbon containing) forms of nitrogen such as Urea and its derivatives like Urea Triazone; Urea Formaldehyde; Methylene Urea; Dimethylene Urea; Trimethylene Urea; Isobutylaldehyde Urea (ibdu), as well as other naturally derived organic fertilizers. Also Urea-Crotonaldehyde (CDU) and partially condensed Aldehydes with Urea (like UFC, UF 85, etc.) can be added to this list.

Particularly preferred compounds (a) in the context of the invention are Urea (liquid and/or solid), UAN (urea ammonium nitrate), Ammonium Hydroxide, Ammonium Nitrate, Ammonium sulfate, Anhydrous Ammonia, or mixtures thereof (of any of these). The form in which the fertilizer (a) is provided is not important as long as direct contact with compounds (b) is possible.

Fertilizers (a) used in processes and compositions of the invention can be in liquid and/or in solid form. Liquid fertilizers are known to tolerate certain amounts of solid fertilizers.

Fertilizers (a) ideally are applied to the soil. When applied to the foliage, then part of the fertilizer applied will wash off and finally reach the soil. Fertilizers (a) can also be injected into the soil. Any suitable application method is possible as long as it allows a direct contact of compounds (a) and (b). Possibly fertilizers (a) are applied via fertigation.

Compounds (b) can be applied simultaneously with, before or after the fertilizers (a) are applied. Preferably, they are applied simultaneously with the fertilizers (a) for an optimal effect. In any case, it is important that the compounds (b) are applied before the nitrification process sets in. Usually nitrification sets in within 10-15 days, sometimes already within 4 days or even faster, depending on pH and temperature.

Depending on the type of fertilizer (a) being used, in the processes and compositions of the invention nitrification inhibiting compounds (b) are provided in liquid and/or in solid form.

Fertilizers (a) and the nitrification inhibiting compounds (b) can be provided each separately and/or they can be applied together. In case applied separately, the two components (a) and (b) are applied preferably within 5 days, preferably within 3 days, more preferably within 24 hours, most preferably within 12 hours. The actual time which can be left between application of compounds (a) and (b) is heavily dependent on climatic conditions. It is within the routine capabilities of the skilled person to determine an appropriate application window based on the present disclosure, taking into account that the most pronounced nitrification inhibition will be found in case of simultaneous application.

In one embodiment of the invention, the fertilizers (a) are in solution with the one or more nitrification inhibiting compounds (b). The solution containing both can be applied to the soil and/or can be applied to the foliage and/or can be injected into the soil. Possibly the solution is applied via fertigation.

In another embodiment of the invention, the fertilizers (a) are in homogeneous solid mixture with the one or more nitrification inhibiting compounds (b). For instance, the fertilizers (a) and the one or more nitrification inhibiting compounds (b) can be spread homogeneously throughout a same granule and/or prill. This granule or prill, optionally, can be surrounded by one or more coating layers that comprise one or more nitrification inhibiting compounds (b).

In yet another embodiment of the invention, the one or more nitrification inhibiting compounds (b) are present in a coating layer that surrounds a core made up of fertilizers (a). In this case, the one or more nitrification inhibiting compounds (b) can be present for instance in a coating around a urea granule and/or prill. The same is possible with ammonium nitrate granules and/or prills.

In processes, uses and compositions of the invention, compounds (b) are selected on their potential to reduce nitrogen losses through nitrification. Compounds (b1) and/or (b2) and/or (b3) proved to be highly suited whereas sulfates like ammonium sulfates and sulfites or bisulfites like potassium bisulfite did not work.

In one embodiment of the invention, the one or more nitrification inhibiting compounds (b) used in processes and compositions of the invention are polysulfide salts (b1). The polysulfide (b1) can be an ammonium polysulfide and/or an alkaline polysulfide and/or an alkaline earth polysulfide.

Alkaline polysulfides typically correspond to the formula M-Sq-M, wherein the "M" is independently selected from alkali metal ions such as sodium and/or potassium ions, preferably sodium ions, wherein the "S" has its normal meaning, that is, in this context a sulfide, and wherein "q" is equal to or greater than 2. Preferably, "q" is an integer from 2 to 5, more preferably from 2 to 4. Most preferably, the alkaline polysulfide has an "average q" of between 3.5 and 5, of between 3.5 and 4.5.

Alkaline earth polysulfides typically correspond to the formula M-Sq, wherein the "M" is independently selected from alkaline earth ions such as calcium or magnesium, wherein the "S" has its normal meaning, that is, in this context a sulfide and wherein "q" is equal to or greater than 2.

Preferably, "q" is an integer from 2 to 6, more preferably from 3 to 6. Most preferably, the alkaline earth polysulfide has an "average q" of between 3 and 5 or between 4 and 5.

Preferred compounds (b1) are calcium polysulfides and/or sodium polysulfides and/or ammonium polysulfides and/or potassium polysulfides. More preferred are calcium polysulfides and/or potassium polysulfides and/or ammonium polysulfides. Particularly preferred are calcium polysulfides and/or potassium polysulfides. Most preferred are calcium polysulfides.

In another, preferred, embodiment of the invention, the one or more nitrification inhibiting compounds (b) used in processes or compositions of the invention are thiosulfate salts (b2) such as Me-thiosulfates, wherein "Me" is (NH₄)₂, K₂, Ca, Mg, Mn, Zn, Cu and/or Fe. Preferred are ammonium thiosulfates and/or sodium thiosulfates and/or potassium thiosulfates and/or calcium thiosulfates and/or magnesium thiosulfates. Particularly preferred are ammonium thiosulfates and/or potassium thiosulfates and/or calcium thiosulfates and/or magnesium thiosulfates. Even more preferred are ammonium thiosulfates and/or potassium thiosulfates and/or calcium thiosulfates. In an embodiment of the invention, the thiosulfate is an ammonium thiosulfate. In another embodiment of the invention, the thiosulfate is a potassium thiosulfate. In another embodiment of the invention, the thiosulfate is a magnesium thiosulfate. In another embodiment of the invention, the thiosulfate is a calcium thiosulfate.

Below are a few examples of liquid compounds (b2) as they can be found on the market:
- A potassium thiosulfate, which is a 50% aqueous solution (grade 0-0-25-17S)
- A magnesium thiosulfate, which is a 5-25% aqueous solution (grade 0-0-0-10S-4Mg)
- A calcium thiosulfate, which is a 5-25% aqueous solution (grade 0-0-0-10S-6Ca)
- An ammonium thiosulfate, which is a 50-60% aqueous solution (grade 12-0-0-26S).

In another embodiment of the invention, the one or more nitrification inhibiting compounds (b) used in processes or compositions of the invention are hydrogen sulfide salts (b3) such as a sodium hydrosulfide (NaHS).

Possibly mixtures of compounds (b1) and/or (b2) and/or (b2) are used in processes or compositions of the invention. Particularly preferred in the invention are calcium thiosulfates and/or ammonium thiosulfates and/or potassium thiosulfates and/or calcium polysulfides.

Below some preferred combinations of fertilizers (a) and compounds (b) are listed:
- Urea (liquid or solid, preferably solid) with one or more thiosulfates and/or polysulfides; UAN (liquid or solid, preferably liquid) with one or more thiosulfates and/or polysulfides; Ammonium Nitrate with one or more thiosulfates and/or polysulfides; Anhydrous Ammonia with one or more thiosulfates and/or polysulfides; Ammonium Hydroxide with one or more thiosulfates and/or polysulfides; Ammonium sulfate with one or more thiosulfates and/or polysulfides;
- More in particular: Urea (liquid or solid, preferably solid) with ammonium thiosulfate and/or potassium thiosulfate and/or calcium thiosulfate and/or calcium polysulfide; UAN (liquid or solid, preferably liquid) with ammonium thiosulfate and/or potassium thiosulfate and/or calcium thiosulfate and/or calcium polysulfide; Ammonium Nitrate with ammonium thiosulfate and/or potassium thiosulfate and/or calcium thiosulfate and/or calcium polysulfide; Anhydrous Ammonia with ammonium thiosulfate and/or potassium thiosulfate and/or calcium thiosulfate and/or calcium polysulfide; Ammonium Hydroxide with ammonium thiosulfate and/or potassium thiosulfate and/or calcium thiosulfate and/or calcium polysulfide; Ammonium Sulfate with ammonium thiosulfate and/or potassium thiosulfate and/or calcium thiosulfate and/or calcium polysulfide.

In processes, uses and composition of the invention, the ratio of "Total protectable nitrogen" over "sulfur from compounds (b)" in general is at most about 7.9:1, 7.8:1, 7.7:1, 7.6:1, 7.5:1, 7.4:1, 7.3:1, 7.2:1, 7.1:1, or 7:1. The nitrification rate significantly reduced when this ratio was most about 6.9:1, 6.8:1, 6.7:1, 6.6:1, 6.5:1, 6.4:1, 6.3:1, 6.2:1, or 6.1:1. Preferably however, this ratio at most is about 6.0:1, 5.9:1, 5.8:1; 5.7:1, or 5.6:1. Preferably this ratio at most about 5.5:1, 5.4:1, 5.3:1, 5.2:1, or 5.1:0. Best results were obtained when this ratio at most is about 5.0:1, 4.9:1, 4.8:1, 4.7:1, 4.6:1, or 4.5:1. Preferably, this ratio is at least about 1.1:1, 1.2:1, 1.3:1, or 1.4:1, more preferably at least about 1.5:1, 1.6:1, 1.7:1, 1.8:1, or 1.9:1. Ideally, this ratio is at least about 2.0:1, 2.1:1, 2.2:1, 2.3:1, 2.4:1, or 2.5:1. Best results were obtained when this ratio was between about 1.5:1 and about 6.0:1, between about 1.5:1 and about 5.5:1, between about 1.7:1 and about 5.0:1, between about 2:1 and about 5:1.

Compositions of the invention can further comprise one or more nitrification inhibitors (c1) and/or one or more urease inhibitors (c2), wherein compounds (c) are different from compounds (b). A preferred urease inhibitor (c2) is NBPT. A preferred nitrification inhibitor (c1) is DCD and/or nitrapyrin.

If compounds (c) are present, then usually in lower amounts than normally needed for an efficient inhibition of urease and nitrification activity. This due to the presence of compounds (b).

In most cases, addition of one or more compounds (c1) had hardly any effect. Nitrification rates with and without compounds (c1) were comparable. Hence, compounds (c1) can in general be omitted. In an embodiment of the invention, compositions of the invention comprise no compounds (c1) like DCD and/or nitrapyrin. In a particular embodiment of the invention, compositions of the invention comprise no compounds (c1) and no compounds (c2). This particular embodiment is preferred, as it lowers costs for the farmer, and reduces environmental burden on the soil microbiome.

A farmer may want to add one or more nitrification inhibitors (c1) for various reasons, e.g. to be on the safe side, because they have a working mechanism that is different from that of compounds (b), for cost reasons, for regulatory reasons etc. The present invention enables the use of only about 90, 80, 70, 60, 50%, even less, of the amount normally used for nitrification inhibitors (c1) such as DCD. This due to the presence of compounds (b). When compounds (c1) are added, like DCD, then typically their amount in compositions of the invention is below about 0.6, 0.5, 0.4, 0.3, 0.2, 0.1, or 0.05 wt%. More preferably when compounds (c1) are added, like DCD, then typically their amount in compositions of the invention is below about 0.04 wt% or 0.01 wt.%. Preferably the compositions of the inventions comprise DCD in an amount of less than 0.5, 0.4, 0.3, 0.2, 0.1, or 0.05 wt%. More preferably the compositions of the inventions comprise DCD in an amount of less than 0.04 wt% or 0.01 wt.%. When compounds (c2) are added, then typically their amount is at most about 1, 0.9, 0.8, 0.7, 0.6, 0.5, 0.4, 0.3, 0.2 or 0.1 wt%. These amounts are relative to the total weight the composition, including water

When compounds (c1) are added, then typically they are added such that the ratio (w/w) of the amount of sulfur (S) from compounds (b) to compounds (c1) is in the range of 5:1 to 40:1, preferably in the range of 10:1 to 30:1, more preferably in the range of 15:1 to 25:1, most preferably in the range of 18:1 to 20:1.

Hence, in preferred embodiments there is provided a protected fertilizer composition comprising:
- One or more ammonium-containing fertilizers (a1) and/or one or more ammonium-producing fertilizers (a2);
- One or more nitrification inhibiting compounds (b) that are selected from the group consisting of (b1) polysulfides and/or (b2) thiosulfates and/or (b3) hydrosulfides;
- At least one nitrification inhibitor (c1) that is different from compounds (b);
Wherein:
- the ratio of "Total protectable nitrogen" over "sulfur from compounds (b)" is at most about 8:1, preferably at most about 7.5:1; more preferably at most about 7:1;
- the amount of nitrification inhibiting compounds (b) is at least about 13 wt% relative to the total weight the composition, including water,
- the amount of fertilizers (a) preferably is at least about 40 wt% relative to the total weight the composition, including water; and
- the amount of nitrification inhibitors (c1) is less than below about 0.6, 0.5, 0.4, 0.3, 0.2, 0.1, or 0.05 wt% relative to the total weight the composition, including water.

In more preferred embodiments there is provided a protected fertilizer composition comprising:
- One or more ammonium-containing fertilizers (a1) and/or one or more ammonium-producing fertilizers (a2);
- One or more nitrification inhibiting compounds (b) that are selected from the group consisting of (b1) polysulfides and/or (b2) thiosulfates and/or (b3) hydrosulfides;
- DCD;
Wherein:
- the ratio of "Total protectable nitrogen" over "sulfur from compounds (b)" is at most about 8:1, preferably at most about 7.5:1; more preferably at most about 7:1;
- the amount of nitrification inhibiting compounds (b) is at least about 13 wt% relative to the total weight the composition, including water;
- the amount of fertilizers (a) preferably is at least about 40 wt% relative to the total weight the composition, including water;
- the amount of DCD is less than below about 0.6, 0.5, 0.4, 0.3, 0.2, 0.1, or 0.05 wt% relative to the total weight the composition, including water; and
- preferably the ratio (w/w) of the amount of sulfur (S) from compounds (b) to DCD is in the range of 5:1 to 40:1, preferably in the range of 10:1 to 30:1, more preferably in the range of 15:1 to 25:1, most preferably in the range of 18:1 to 20:1.

In a most preferred embodiment there is provided a protected fertilizer composition comprising:
- One or more ammonium-containing fertilizers (a1) and/or one or more ammonium-producing fertilizers (a2) selected from urea, UAN, ammonium nitrate, anhydrous ammonia, ammonium hydroxide, ammonium sulfate and combinations thereof, preferably UAN;
- One or more nitrification inhibiting compounds (b) which are (b2) thiosulfates;
- DCD;
Wherein:
- the ratio of "Total protectable nitrogen" over "sulfur from compounds (b)" is at most about 8:1, preferably at most about 7.5:1; more preferably at most about 7:1;
- the amount of nitrification inhibiting compounds (b) is at least about 13 wt% relative to the total weight the composition, including water;
- the amount of fertilizers (a) preferably is at least about 40 wt% relative to the total weight the composition, including water;
- the amount of DCD is less than 0.3 wt.%, preferably less than 0.1 wt.%, more preferably less than 0.04 wt.%, most preferably less than 0.02 wt.% relative to the total weight the composition, including water; and
- preferably the ratio (w/w) of the amount of sulfur (S) from compounds (b) to DCD is in the range of 5:1 to 40:1, preferably in the range of 10:1 to 30:1, more preferably in the range of 15:1 to 25:1, most preferably in the range of 18:1 to 20:1.

Processes and compositions of the invention allow to reduce the nitrification rate by at least about 10, 15, 20, 25, 30, 35, 40, 45, 50% or more. Ideally, the nitrification rate is reduced by at least about 60, 70, 80, 85, 90%, this without the presence of compounds (c1) like DCD. In general, nitrification can be efficiently impaired or inhibited, even fully blocked.

Specific levels of ammonium and nitrate can be maintained in the cropping system, using processes or compositions of the invention, resulting in higher yield plateaus for agricultural crops.

Processes and compositions of the invention proved to efficiently inhibit or impair the first steps in the nitrification process, whereby ammonium is converted to nitrite by the action of *Nitrosomas spp.* in soil systems. Because of the formation of little to no nitrite, also little to no nitrate was formed.

A process of the invention, wherein one or more compounds (b) are used in the amounts as indicated is able to reduce the action of AMO or HAO bacteria, more in particular of *Nitrosomas spp.*

Because little to no nitrate is formed, leaching of nitrate and potentially even atmospheric pollution by denitrification are reduced as well. Nitrate pollution of groundwaters resulting from the nitrification of ammonium-nitrogen to nitrate-nitrogen in soil system can be prevented hereby and/or be significantly reduced.

A further aspect of the invention relates to fertilizer compositions (I) that are protected, at least in part, against nitrogen losses through nitrification. They are referred to as "protected" fertilizer compositions. Provided in the invention are as such protected fertilizer compositions (I) that comprise:
- One or more ammonium-containing fertilizers (a1) and/or one or more ammonium-producing fertilizers (a2);
- One or more nitrification inhibiting compounds (b) that are selected from the group consisting of (b1) polysulfides and/or (b2) thiosulfates and/or (b3) hydrosulfides;
- Wherein the ratio of "Total protectable nitrogen" over "sulfur from compounds (b)" is at most about 8:1, preferably at most about 7.5:1, more preferably at most about 7:1;
- Wherein the amount of nitrification inhibiting compounds (b) preferably is at least about 13 wt%, and wherein the amount of fertilizers (a) preferably is at least 40 wt%, this relative to the total weight of the composition, including water. For ammonium thiosulfates (b2), the amount preferably is at least about 14, 15, 16, 17, 18, 19, or 20 wt% this relative to the total weight of the composition, including water.

In an embodiment of the invention, compositions of the invention comprise at least one nitrification inhibitor (c1) and/or at least one urease inhibitor (c2) different from compounds (b). In other embodiments of the invention, compositions of the invention comprise no compounds (c1), even no compounds (c).

Further provided is in particular a protected fertilizer composition (I) that comprises:
- One or more ammonium-containing fertilizers (a1) and/or one or more ammonium-producing fertilizers (a2);
- One or more nitrification inhibiting compounds (b) that are selected from the group consisting of (b1) polysulfides and/or (b2) thiosulfates and/or (b3) hydrosulfides;
- Wherein the ratio of "Total protectable nitrogen" over "sulfur from compounds (b)" is at most about 8:1, preferably at most about 7.5:1, more preferably at most about 7:1;
- Wherein the amount of nitrification inhibiting compounds (b) preferably is at least about 13 wt%, wherein the amount of fertilizers (a) preferably is at least 40 wt%, this relative to the total weight of the composition, including water;
- And wherein the direct contact of compounds (b) with compounds (a) in the soil leads to elimination or at least a substantial reduction of nitrification.

Preferably, the amount of compounds (b) in any of the compositions (I) of the invention is at least about 14, 15, 16, 17, 18, 19 or 20 wt%. Preferably, the amount of compounds (a) in any of the compositions (I) of the invention is at least about 40, 45, *50, 55* wt% or even at least about 60 wt%. This amount is defined as relative to the total weight of the composition (i.e. water or another solvent being included)

For suitable compounds (a), (b), (c), etc. and for suitable amounts and ratios of any of these, see above. For preferred combinations of compounds (a) and (b) that proved highly efficient, see also above.

Process and compositions of the invention slow down the nitrification process, even block this process completely. Processes and compositions of the invention proved in particular effective in sandy soils and/or loamy sand soils and/or loamy soils (e.g. fine loam), with a pH of preferably between about 6 and about 8, between about 6.5 and about 7.5, more preferably near 7.

Processes, uses and compositions of the invention in many cases proved more efficient than DCD.

In an embodiment of the invention nitrogen losses from Urea and/or from UAN and/or from Ammonium Nitrate and/or from Anhydrous Ammonia and/or from Ammonium Hydroxide and/or from Ammoniums Sulfate are "prevented" or "minimalized" with processes or compositions of the invention. The Urea herein can be liquid Urea and/or solid Urea. The following compounds (b) were able to significantly slow down N losses through nitrification in any of these fertilizers (a), and in general: ammonium thiosulfates, potassium thiosulfates, calcium thiosulfates, calcium polysulfides and/or potassium polysulfides. Preferred are: ammonium thiosulfates, potassium thiosulfates, calcium thiosulfates and/or calcium polysulfides. Most preferred are thiosulfates (b).

Compositions of the invention can be solid and/or liquid, depending on the end use. In a particular embodiment of the invention, the composition of the invention is a liquid, more in particular a solution, like a solution in water or an aqueous solution (II). The amount of water in the aqueous solution (II) in general is at least about 15, 20, 25% by weight, relative to the total weight of the composition. Aqueous solutions (II) of the invention typically contain less than about 10% by weight of organic solvents. This amount is usually below about 5, 4, 3, 2, 1, 0.5 wt%.

Compositions (II) of the invention can be made in various ways. It is possible to freshly prepare e.g. solutions (II) from two different feed streams, one comprising compounds (a) and the other one comprising compounds (b). Possibly solutions (II) are stored in a container or tank prior to use. They can easily be stored therein for at least 1 month, often at least 2 months up to about 6 months and more.

Another aspect of the invention relates to a container or a storage tank containing a liquid composition (II) of the invention, further optionally containing one or more corrosion inhibitors. The use of corrosion inhibitors may be beneficial or necessary, depending on the type of fertilizer (a). Provided in the invention are hence also aqueous compositions (II) that comprises:
- One or more ammonium-containing fertilizers (a1) and/or one or more ammonium-producing fertilizers (a2),
- One or more nitrification inhibiting compounds (b) that are selected from the group consisting of (b1) polysulfides and/or (b2) thiosulfates and/or (b3) hydrosulfides,
- Optionally, one or more nitrification (c1) and/or urease (c2) inhibitors that are different from compounds (b), and
- One or more corrosion inhibitors (d),
- With the proviso that the ratio of "Total protectable nitrogen" over "sulfur from compounds (b)" is at most about 8:1, preferably at most about 7.5:1, more preferably at most about 7:1; the amount of nitrification inhibiting compounds (b) preferably is at least about 13 wt%, and the amount of compounds (a) preferably is at least about 40 wt%, this relative to the total weight of the composition.

Generally, in compositions (I) or (II) of the invention the sum of (a)+(b)+(c)+(d) in weight percentages is at least about 75, 80, 85, 90, 91, 92, 93, 94, 95, 96, 97, 98 or even 99%. In a particular embodiment of the invention, the sum of (a)+(b)+(c) in weight percentages is at least about 80, 85, 90, 91, 92, 93, 94, 95%. In another particular embodiment of the invention, the sum of (a)+(b) in weight percentages is at least about 80, 85, 90, 91, 92, 93, 94, 95%. Possibly, compositions (I) or (II) of the invention contain some additives, like for instance a colorant or a dye (e). These percentages are wt.% relative to the total weight the composition, including water.

In another embodiment of the invention, the composition of the invention is a solid (III). The solid can take the form of a granule and/or a prill. In an embodiment of the invention, compounds (a) and (b) are homogeneously spread over said granule or prill, whereby, optionally, the granule or prill can be surrounded by one or more coating layers that contain some additional compounds (b). A homogeneous spread of compounds (a) and (b) is generally preferred over having a prill or granule (of urea, ammonium nitrate, ...) that is coated with one or more layers containing compounds (b). The granule or prill, in any embodiment, can further be surrounded by one or more protective layers that protect the granule and/or prill from, e.g., moisture.

Often anticaking additives (f) are added to prevent compacting upon storage and/or transport. Other additives that possibly can be added are dyes, colorants, processing aids, grinding binders, etc. Generally though, the sum of (a)+(b)+(c)+(f) in weight percentages is at least about 75, 80, 85, 90, 91, 92, 93, 94, 95, 96, 97, 98 or even 99%. In a particular embodiment of the invention the sum of (a)+(b)+(c) in weight percentages is at least about 80, 85, 90, 91, 92, 93, 94, 95%. In yet another particular embodiment of the invention the sum of (a)+(b) in weight percentages is at least about 80, 85, 90, 91, 92, 93, 94, 95%. These percentages are wt.% relative to the total weight the composition, including water.

In compositions (I), (II) or (III) of the invention typically the amount of fertilizers (g) other than compounds (a) and (b) is generally less than 20, 15, 10, 5% by weight, relative to the total weight of the composition, including water. In theory though, the blending with other fertilizers, more in particular other NPK fertilizers, is possible. For instance, a blending or use together with e.g. APP (Ammonium Polyphosphates) and/or ammoniated zinc may be beneficial, in particular in combination with a potassium thiosulfate.

A further aspect of the invention relates to the use of one or more polysulfides (b1) and/or of one or more thiosulfates (b1) and/or of one or more hydro sulfides (b3) as nitrification inhibitors, wherein compounds (b) are used in such an amount that the ratio of "Total protectable nitrogen" over "sulfur from compounds (b)" is at most about 8:1, preferably at most about 7.5:1, more preferably at most about 7:1, even more preferably at most about 6:1, most preferably at most about 5:1. It was found that the use of these compounds (b) in the amounts as indicated allows to inhibit nitrification by at least 50, 60, 70, 80, 90% or more. It was found that said compounds (b) inhibit in particular the first steps in the nitrification process wherein ammonium-N is converted to nitrite-N.

To inhibit nitrogen losses through nitrification the following composition (IV) can be used, one that comprises:
- One or more ammonium-containing fertilizers (a1) and/or one or more ammonium-producing fertilizers (a2),
- One or more nitrification inhibiting compounds (b) that are selected from the group consisting of (b1) polysulfides and/or (b2) thiosulfates and/or (b3) hydrosulfides,
- Optionally, one or more nitrification (c1) and/or urease (c2) inhibitors that are different from compounds (b),
- Wherein the ratio of "Total protectable nitrogen" over "sulfur from compounds (b)" is at most about 8:1, preferably at most about 7.5:1, more preferably at most about 7:1, even more preferably at most about 6:1, most preferably at most about 5:1.

This to
- Improve nitrogen use efficiency (NUE),
- Reduce N losses through nitrification,
- Inhibit the first steps in the nitrification process whereby ammonium is converted to nitrite,
- Lower the pollution of groundwater as a result of nitrification,
- Lower the emission of NOx gases into the environment,
- Keep the ammonium over nitrate balance on the field within certain limits.

In the above, the amount of nitrification inhibiting compounds (b) preferably is at least about 13 wt%, and the amount of compounds (a) preferably is at least about 40 wt%, this relative to the total weight of the composition, including water.

A further aspect of the invention is directed at the use of one or more compounds (b) that are selected from the group consisting of (b1) polysulfides and/or (b2) thiosulfates and/or (b3) hydrosulfides as described herein, preferably the use of thiosulfates as a nitrification inhibitor. Preferred thiosulfates in the context of the present invention and in particular for the uses described herein are ammonium thiosulfate, calcium thiosulfate, potassium thiosulfate and combinations thereof. In preferred embodiments there is provided the use of one or more compounds (b) that are selected from the group consisting of (b1) polysulfides and/or (b2) thiosulfates and/or (b3) hydrosulfides, preferably selected from the group consisting of thiosulfates, preferably selected from the group consisting of ammonium thiosulfate, calcium thiosulfate, potassium thiosulfate and combinations thereof as a nitrification inhibitor wherein the soil health, preferably the soil microbiome health is maintained or not significantly negatively influenced. Such embodiments have been described in more detail in the summary of the invention. In these embodiments it is preferred that the total microbial biomass is determined according to ISO14240-2:1997 and the total active urease enzyme is determined according to the method of Kandeler E., Gerber H. Biology and Fertility of Soils. 1988;6:68-72 using a urea incubation time of 2h at 37°C and extraction of the formed ammonia with 1N KCl.

Materials of the invention can be used on fields having whatever crop, like fields where wheat, vegetables, fruits, nut crops, turfgrass, etc. grow.

The invention is further illustrated by the following examples, which are purely illustrative and do not intend to limit the invention.

### EXAMPLES

### Experiments 1 & 2 - Evaluation of the nitrification inhibition properties of different S-sources and comparing the effect in different soil systems

### Materials and Methods

A series of soil incubation experiments were developed to evaluate the enhanced nitrification inhibiting properties of thiosulfates and other sulfur compounds when applied in conjunction with non-nitrate-N sources such as urea- N (NH₂)₂CO and ammonium-N (NH₄⁺), Two soils were used in this experiment, a Tujunga loamy sand (thermic Typic Xeropsamments) collected in Dinuba, California along with a Clarion fine loam (mesic Typic Hapludolls), collected in Boone, Iowa.

Soils were selected due to their contrasting physical and chemical characteristics as well as the percentage of economically important agricultural regions they represent. Each soil was collected by hand from the top 15mm of the soil profile and allowed to air-dry. Both soils were hand screened to remove large clumps and rocks that may have interfered with the experiment. Soil samples were taken before the start of the experiment and analyzed to assess the initial nutrient content and pH of the soil. Both soils were found to be within the typical range of nutrients and to range in pH from 6.7-7.1.

The experiments were made up of numerous individual plastic containers that each represented one (1) replicate of each fertilizer treatment and soil. All experiments were arranged as a completely randomized design consisting of 12-20 fertilizer treatments, two soils, with six replicates.

To begin the experiment, 200g of the dried and screened soil was added to a 709 mL sealable plastic container. Distilled water was added to each container to bring the moisture level up to what would be considered optimal field moisture. It was important to determine this for each soil separately to ensure neither soil was too dry or too moist. This volume ranged from 15-25 ml per container with the Clarion soil being the highest. Once the appropriate amount of water was applied to each container, they were thoroughly stirred to ensure uniform mixing and to eliminate any clumps.

After the soil containers were filled and moistened, the individual liquid fertilizer treatments were prepared in a 100ml Erlenmeyer flask. All treatments were applied as liquids to ensure uniform mixing and accurate applications. For some of the treatments a 20% -N urea solution was used as the primary nitrogen source. The solution was made by dissolving 197.4g of analytical grade urea (NH₂)₂CO (46% N) into 256.6g of distilled H₂O to make 454g of stock solution. The other primary nitrogen source used in the experiment was a 32% N solution composed of 50% urea-N and 25% ammonium-N and 25% nitrate -N, commonly referred to as UAN 32%.

Each of these nitrogen sources (a) were then combined with liquid sources of sulfur (b) such as ammonium thiosulfate (Thio-Sul^{®}), potassium thiosulfate (KTS^{®}), calcium thiosulfate (CaTs^{®}), calcium polysulfide (Soil Mend) and ammonium sulfate (NH₄)₂SO4. In addition to the sulfur compounds listed, the nitrification inhibitor (c1) dicycandiamide (DCD) and the urease inhibitor (c2) N-(n-Butyl) thiophosphoric triamide (NBPT) were added as industry standards in the experiments.

All fertilizer treatments were made to the soil surface in each container using a micropipette at a nitrogen rate of 134.7 kg ha⁻¹ calculated on the surface area of each container which equals 125.8 cm². Once the fertilizer treatment was evenly distributed across the surface of the soil the soil was thoroughly blended to ensure even incorporation of the fertilizer throughout the soil. After each of the treatments were applied, the containers were closed and placed on a laboratory table and allowed to incubate at 23°C. Each container was briefly opened and stirred every 3 days to ensure adequate aeration and eliminate nitrogen losses through denitrification.

Soil samples were initially taken at one (1) day after treatment (DAT). After this, samples were collected twice weekly for the first three weeks and once weekly in subsequent weeks. Collecting samples began with opening each container and stirring the soil followed by the collection of precisely five (5) grams of soil (between 4.99g and 5.01g). A second 2.5 g sample is also taken and allowed to dry until a constant weight is achieved. The difference in mass is recorded and used in later calculations. This was done to account for slight variations in moisture content among samples. After collecting and weighing both soil samples, the 5 g soil sample was transferred to a 50ml centrifuge tube and 25ml of a 2M KCl solution was added. Centrifuge tubes were capped and placed in a mechanical shaker for 30 minutes. This process was repeated for each sample in the study.

While the samples were shaking, funnel racks were set up throughout the lab. A No. 42 filter paper (28mm diameter) was folded and placed in each of the 62 mm funnels. A 20ml scintillation vial was placed under each funnel stem to collect the filtrate from each sample. Each scintillation vial was labeled with treatment number, replication and the date.

After the soil samples have shaken for 30 minutes in the 2M KCl they were poured carefully into each corresponding funnel. The samples were allowed to filter using only gravity until each vial was full. Filtrate samples were capped and placed in a cardboard vial rack and placed in a freezer and stored until analysis at -18°C.

All samples were shipped on dry ice for analysis of ammonium-N (NH₄⁺) and combined nitrate (NO₃⁻) and nitrite (NO₂⁻) concentrations. The procedure used for analysis was adapted from work by Sims, Ellsworth, and Mulvaney in their article Microscale determination of inorganic nitrogen in water and soil extracts published in 1995. Analysis was done using a BioTek, µ Quant model colorimetric analyzer. Results were compared to known standards and a calibration curve was formed. The end concentrations for ammonium-N (NH₄⁺) and combined nitrate (NO₃⁻) and nitrite (NO₂⁻) were reported in µg/mg or parts per million (ppm).

The objective of Experiment 1 was to evaluate the nitrification inhibition properties of various sulfur containing compounds and use rates. A Tujunga loamy sand was used in the study. In the first experiment a total of 12 treatments were used.

The primary nitrogen source in the fertilizer treatments was a 20%-N urea solution (a) that was blended in differing ratios with liquid sources of sulfur such as ammonium thiosulfate (Thio-Sul^{®}), calcium thiosulfate (CaTs^{®}), calcium polysulfide (Soil Mend), ammonium bisulfite and ammonium sulfate (produced by Tessenderlo Kerley Inc.). The other primary nitrogen source in the fertilizer treatments was 32% N solution composed of 50% Urea-N, 25% Ammonium-N and 25% Nitrate-N, commonly referred to as UAN 32%. In addition to the sulfur compounds listed, the nitrification inhibitor (c1) dicycandiamide (DCD) and the urease inhibitor (c2) N-(n-Butyl) thiophosphoric triamide (NBPT) were added as industry standards in the experiments.

In the Tables below, the following abbreviations are used: US: Urea solution 20wt.%-N, Thio-Sul: ammonium thiosulfate solution, 12-0-0-26S, ABS: ammonium bisulfite solution, 9-0-0-21S, AS: ammonium sulfate, CaTs^{®}: calcium thiosulfate, solution 0-0-10S-6Ca, CaPS: calcium polysulfide solution, 0-0-0-22S-6Ca, KTS^{®}: potassium thiosulfate, 0-0-25-17S. DCD: when used was applied at 0.6% by weight (Agrotain Plus Rate), NBPT solution: when used was applied at 454g per ton (Agrotain Ultra Rate). *=Protectable N: Thiosulfate-S ratio (excluding NO₃⁻)

The objective of Experiment 2 was to see if similar results could be obtained with a different soil: a Clarion fine loam. The results were virtually identical to those from Experiment 1. The effect of changing soil type had no effect on the nitrification inhibition properties of all tested thiosulfates and polysulfides.

Results of the various Experiments are presented in Tables 1 & 2 below.

The level of nitrification inhibition discovered in Experiments 1 and 2 were surprising. By comparing the levels of both ammonium-N (NH₄⁺) and of combined nitrate-N (NO₃⁻) and nitrite (NO₂⁻) over time it was clear that some of the fertilizer treatments had a significant effect on the conversion of ammonium-N (NH₄⁺) into nitrate-N (NO₃⁻).

As expected, the commercially available nitrification inhibitor DCD was very effective at slowing the conversion of ammonium-N (NH₄⁺) into nitrate-N (NO₃⁻) in both treatments 13R and 14R. What is surprising is that treatments with an N: thiosulfate-S ratio of less than about 5:1 had equal to or even greater nitrification inhibition properties than the widely used nitrification inhibitor DCD. See for example treatments 4 and 5. No nitrification inhibition was observed with either ammonium sulfate or ammonium bisulfite - see Examples 9R and 10R. The data further show that compounds (b) can be partially replaced by other S-sources as long as this Protectable N:S ratio is kept within the specified ranges - See Examples 7 and 8. The Protectable N : Total S (from any source) ratio, as shown, is not a good criterion.

Data further shows that comparable results are obtained with the different thiosulfates (various cations). Differences seen are linked to the amount of active ingredient, and not so much to the nature of the thiosulfate. Polysulfides are strong nitrification inhibitors too at Prot N: Polysulfide-S ratios comparable to those for thiosulfates. The same concept of protectable N:S ratios as defined works for simple as well as for mixed sources of N, see for instance treatments 17-20 wherein UAN32% is used an N-source.

The data further show that the proposed system is compatible with standard nitrification (c1) and/or urease (2) inhibitors, like DCD and NBPT (see Example 6). Additional benefits in nitrification were not observed by adding DCD. The addition of NBPT had some supplementary effect on the evolution of ammonium due to its inhibitory effect on Urea hydrolysis. The use of thiosulfates (b2) and of polysulfides (b1) is preferred over the use of existing nitrification inhibitors because they not only protect applied nitrogen, but also provide essential sulfur. Furthermore, as explained herein elsewhere it was surprisingly found that the thiosulfates do not have any negative effect on soil microbiome health. Because thiosulfates (b2) and polysulfides (b1) significantly slow the nitrification process, they would also reduce the emission of NOx gases into the environment. The data presented here mimic situation in the field.

Tests were later repeated on broccoli plants grown in pots, confirming a nitrification inhibitory effect as described above, see example 5.

**Table 1. List of treatment number, name, compositions, "N:Thiosulfate-S ratio", "N:Total S ratio", and volumes (µL) applied to soils in Experiment 1 conducted in Dinuba California with the Tujunga loamy sand.**

| Treatment | Cpd (b2) | Other S source | Ccpd (c) | Compositions | Analysis of blend (N-P-K-S) | N:Thiosulfa te-S ratio (**and** *) | N:Total S ratio | Nitrification inhibition effect | Applied volume (µL) | PPM S from Thiosul |
|---|---|---|---|---|---|---|---|---|---|---|
| 1R | - | - | - | Distilled water | | 0:0 | 0:0 | None | 755 | 0 |
| 2R | - | - | - | 100% US | 20-0-0-0 | | | None | 755 | 0 |
| 3 | Thio-Sul^{®} | - | - | 90% US, 10% ATS | 19.2-0-0-2.6S | 7.38:1 | 7.38:1 | Moderate | 761 | 110 |
| 4 | Thio-Sul^{®} | - | - | 85%US, 15% ATS | 18.8-0-0-3.9S | 4.82:1 | 4.82:1 | Strong | 799 | 176 |
| 5 | Thio-Sul^{®} | - | - | 80% US, 20% ATS | 18.4-0-0-5.2S | 3.54:1 | 3.54:1 | Strong | 792 | 240 |
| 6 | Thio-Sul^{®} | - | DCD & NBPT | 80% US, 20% ATS | 18.4-0-0-5.2S | 3.54:1 | 3.54:1 | Strong | 792 | 240 |
| | | | | 0.6% DCD | | | | | | |
| | | | | 0.18% NBPT | | | | | | |
| 7 | Thio-Sul^{®} | ABS | - | 80% US, 17% ATS, 3% ABS | 18.3-0-0-5S | 4.14:1 | 3.63:1 | Strong | 797 | 206 |
| 8 | Thio-Sul^{®} | ABS | - | 80% US, 10% ATS, 10% ABS | 18.1-0-0-4.7S | 6.96:1 | 3.85:1 | Moderate | 806 | 121 |
| 9R | - | ABS | - | 80% US | 17.8-0-0-4.2S | 0:0 | 4.24:1 | None | 820 | 0 |
| | | | | 20% ABS | | | | | | |
| 10R | - | AS | - | 18.9%US | 5-0-0-1.4S | 0:0 | 3.64:1 | None | 3,114 | 0 |
| | | | | 5.7% AS, 75.3% H₂O | | | | | | |
| 11 | KTS^{®} | - | - | 75% US, 25% KTS^{®} | 15-0-6.2-4.25S | 3.53:1 | 3.53:1 | Strong | 940 | 240 |
| 12a | CaTs^{®} | - | - | 80% US, 20% CaTs^{®} | 16-0-0-2S-1.2Ca | 8:1 | 8:1 | None | 922 | 105 |
| 12b | CaTs^{®} | - | - | 64% US, 36% CaTs^{®} | 12.8-0-0-3.6S-2.2Ca | 3.56:1 | 3.56:1 | Strong | 1,136 | 240 |
| 13R | - | - | DCD & NBPT | 99.2% US | 19.8-0-0-0 | 0:0 | 0:0 | Strong | 759 | 0 |
| | | | | 0.6% DCD | | | | | | |
| | | | | 0.18% NBPT | | | | | | |
| 14R | - | - | NBPT | 99.8% US | 20-0-0-0 | 0:0 | 0:0 | Strong | 755 | 0 |
| | | | | 0.18% NBPT | | | | urease inhibition only | | |
| 15R | - | - | DCD | 99.4% US | 19.9-0-0-0 | 0:0 | 0:0 | Strong | 759 | 0 |
| | | | | 0.6% DCD | | | | | | |
| 16R | - | - | - | 100% UAN | 32-0-0-0 | 0:0 | 0:0 | None | 398 | 0 |
| 17 | Thio-Sul^{®} | - | - | 85% UAN, 15% ATS | 29-0-0-3.9S | 7.44:1 (5.69:1)* | 7.44:1 (5.69:1)* | Weak | 437 | 114 (148) |
| 18 | Thio-Sul^{®} | - | - | 80% UAN, 20% ATS | 28-0-0-5.2S | 5.4:1 (4.15:1)* | 5.4:1 (4.15:1)* | Moderate | 453 | 154 (204) |
| 19 | Thio-Sul^{®} | - | - | 71.5% UAN, 28.5% ATS | 26.3-0-0-7.4S | 3.55:1 (2.78:1)* | 3.54:1 (2.78:1)* | Strong | 482 | 240 (304) |
| 20 | Thio-Sul^{®} | - | - | 64.4% UAN, 35.7% ATS | 25-0-0-9.3S | 2.68:1 (2.13: 1)* | 2.68:1 (2.13:1)* | Strong | 509 | 315 (397) |

**Table 2. List of treatment number, name, compositions, "N:Polysulfide-S ratio", "N:Total S ratio", and volumes (µL) applied to soils in Experiment 1 conducted in Dinuba California with the Tujunga loamy sand.**

| Trea t-ment | Cpd (b2) | Other S source | Ccpd (c) | Compositions | Analysis of blend (N-P-K-S) | N:Poly - sulfide -S ratio | N:Total S ratio | Nitrification inhibiti on effect | Applie d volum e (µL) |
|---|---|---|---|---|---|---|---|---|---|
| 21 | CaP S | - | - | 90.8% US, 9.1% CaPS | 18.2-0-0-2S | 9.1:1 | 9.1:1 | None | 798 |
| 22 | CaP S | - | - | 80% US, 20% CaPS | 16-0-0-4.4S-1.2Ca | 3.64:1 | 3.64:1 | Strong | 1,208 |

Calculation of the ratio (w/w) (total protectable N): (S from compounds (b)) is straightforward. As an example, the calculation is explained below for example 3:
- In example 3, the following composition was used: 90% US + 10% ATS.
- As described earlier the urea solution employed is a 20 wt.%-N urea solution. Hence, the final composition contains 0.9*20wt.% N from urea = 18 wt.% N from urea.
- As described earlier the ammonium thiosulfate solution employed has the following analysis: 12-0-0-26S. Hence, the final composition contains
   ∘ 0.1*12 wt.% N from ammonium = 1,2 wt.% N from ammonium and
   ∘ 0.1*26wt.% S from thiosulfate = 2.6 wt.% S from thiosulfate.
- The total amount of protectable nitrogen in the final composition is thus 18 wt.% N from urea + 1,2 wt.% N from ammonium = 19.2 wt.% protectable N
- The total amount of sulfur from compounds (b) in the final composition is thus 2.6 wt.%
- The ratio of (w/w) (total protectable N): (S from compounds (b)) is thus 19.2 / 2.6 = 7.38.
- This can also be seen from the listed analysis of the blend: 19.2-0-0-2.6S.

### Example 3: Effect of composition according to the invention on Soil Urease Activity

150 kg/ha of a solution comprising 39 wt.% of urea ammonium nitrate and 20 wt.% ammonium thiosulfate was applied on soil. To provide a comparative example, another plot was left untreated. Application was performed 6 weeks before the measurement was taken.

Microbial biomass and total active urease enzyme of the fine soil fraction (0-2 mm) were determined by an independent certified control laboratory. The total microbial biomass was determined according to ISO14240-2:1997. The total active urease enzyme was determined according to the method of Kandeler E., Gerber H. Biology and Fertility of Soils. 1988;6:68-72 using a urea incubation time of 2h at 37°C and extraction of the formed ammonia with 1N KCl. The results are shown in Table 2 below.

**Table 3**

| Treatment | Microbial biomass (standard deviation) in mg/kg | Urease (standard deviation) in mg/kg |
|---|---|---|
| Control | 458.37 (69.76) | 25.47 (2.42) |
| Treatment 23: 39% UAN + 20% ATS | 440.30 (57.63) | 23.27 (0.97) |

It can be observed that the treatment did not adversely affect the health of the soil microbiome or the amount of active urease enzyme compared to the untreated control. The composition according to the invention thus has no negative effect on the soil microbiome health nor did it have a lasting effect on the identity (as indicated by the preserved urease activity) of the soil microbiome.

### Example 4: Effect of composition according to the invention on earthworms

A composition of the invention was also tested for effect on earthworms.

Pots of around 2 Liters were filled with 500 grams of soil. The soil comprised 74% Fontainebleau sand, 20% kaolin, 5% sphagnum moss and 0.5% calcium carbonate. Ammonium thiosulfate (12-0-0-26S) was applied at 15 L/ha, 30 L/ha, 60 L/ha, 100 L/ha, 150 L/ha, 200 L/ha, 300 L/ha, 600 L/ha, 1000 L/ha and 1500 L/ha. As a control, only water was applied in an 11^{th} pot. There were 10 earthworms per pot. Each experiment was performed 4 times.

After 14 days, no earthworms had died. Biomass had decreased by 3.9%, which is below the acceptable limit of 20%.

### Example 5: Use of composition on broccoli

An experiment was conducted to determine the effect of the composition according to the invention on plants.

Broccoli was grown in containers. Chlorophyll content was taken by sampling the newest fully developed leaf using a TYS-4N portable chlorophyll meter. The plants were also visually assessed.

Fertilizer was added at a rate of 135 N kg/ha. Treatment 5 of examples 1&2 described herein was tested and compared with a control treatment consisting of urea solution (20%-N) only.

Daily visual observations were made, and after 10 days the chlorophyll content was determined. Chlorophyll content of the plants fertilized with treatment 5 averaged 63.85. Chlorophyll content of the plants of Control Treatment averaged 54.4. Plant growth was better with Treatment 5 than with the Control Treatment.

This demonstrates that even at an application rate of approximately 40kg-S/ha, no negative effects are observed. It was not only shown that high levels of thiosulfate do not cause harm to plants, but in contrast produced consistent growth and resulted in higher chlorophyll content. Based on the results of this experiment, it can be concluded that the addition of higher than typical rate of thiosulfate can result in improved nitrogen use efficiency and enhanced plant growth without the threat of phytotoxicity due to an accumulation of nitrite in the soil.

### Example 6:

Soil samples (50g sandy to loamy soil, dried and sieved (<2 mm) were stored in PVC bottles (closed with parafilm), the soil moisture set to 40% of field capacity and incubated at 10°C for at least one week. Subsequently the soil samples were set to a soil moisture of 70% of the field capacity and treated as outlined in the below tables, wherein dosages are calculated based on a broadcast application assuming homogenous distribution in the top 0-10 cm soil layer and a soil density of 1.25 kg/l (thus corresponding to application in 1.250.000 kg soil per ha). The nitrate concentrations were measured at regular intervals. Each treatment was tested 4 times and measurement averaged. The results are shown in Figure 1 and Table 4. It can be seen that treatments and compositions according to the present invention allow to reduce the DCD dosage by 75% while still achieving essentially complete nitrification inhibition for at least 3-4 weeks.

**Table 4**

| Treatment | Description | Total ammonia fertilization (kg/ha) | DCD (kg/ha) | ATS (kg/ha) |
|---|---|---|---|---|
| Control | Nitrogen based fertilizer | 85,00 | 0,00 | 0,00 |
| 26 | Nitrogen based fertilizer + DCD | 85,00 | 7,39 | 0,00 |
| 27 | Nitrogen based fertilizer + ATS | 147,50 | 0,00 | 521,05 |
| 28 | Nitrogen based fertilizer + ATS | 220,83 | 0,00 | 1130,50 |
| 29 | Nitrogen based fertilizer + DCD + ATS | 94,17 | 1,70 | 68,00 |

| | | | | |
|---|---|---|---|---|
| DCD = Dicyandiamide; ATS = ammonium thiosulfate. | | | | |

## Claims

1. A process for inhibiting, at least in part, nitrification activity of ammonium-containing fertilizers (a1) and/or of ammonium-producing fertilizers (a2), which process comprises the steps of:
a) Applying to soil and/or to foliage a nitrification inhibitory amount of one or more compounds (b) that are selected from the group consisting of (b1) polysulfides and/or (b2) thiosulfates and/or (b3) hydrosulfides;
b) Wherein the one or more compounds (b) are applied simultaneously with, before or after the fertilizers (a) are applied to the soil and/or to the foliage such that the compounds (b) are in direct contact with the ammonium-containing fertilizers (a1) and/or the ammonium-producing fertilizers (a2);
c) Wherein the one or more nitrification inhibiting compounds (b) are applied in an amount:
i. such that the ratio (w/w) of "total protectable nitrogen" over "sulfur from compounds (b)" is at most about 8:1, preferably at most about 7.5:1, more preferably at most about 7:1, and at least about 1.1:1, preferably at least about 1.5:1, more preferably at least about 2:1; wherein "protectable nitrogen" is nitrogen that is not already in the nitrate form and/or
ii. corresponding to a soil level of S (sulfur) that is at least about 50 ppm, preferably at least about 75 ppm, more preferably at least about 100 ppm;
and
d) Wherein compounds (b) are different from compounds (a).

2. The process of claim 1 wherein the soil health, preferably soil microbiome health, is maintained or not significantly negatively influenced, preferably wherein:
a) The total microbial biomass as determined 6 weeks after application of the compounds (b) to the soil and/or the foliage is maintained or not significantly negatively influenced, preferably the total microbial biomass as determined 6 weeks after application of the compounds (b) is more than 70%, preferably more than 80%, more preferably more than 90% of the total microbial biomass compared to a control plot which was not treated with any of compounds (a) and (b) but otherwise submitted to identical treatment; and/or
b) The total amount of active urease enzyme as determined 6 weeks after application of the compounds (b) to the soil and/or the foliage is maintained or not significantly negatively influenced, preferably the total amount of active urease enzyme as determined 6 weeks after application of the compounds (b) is more than 70%, preferably more than 80%, more preferably more than 90% of the total amount of active urease enzyme compared to a control plot which was not treated with any of compounds (a) and (b) but otherwise submitted to identical treatment; and/or
c) The total number of earthworms is maintained or not significantly negatively influenced, preferably total number of earthworms as determined 6 weeks after application of the compounds (b) is more than 70%, preferably more than 80%, more preferably more than 90% of the total number of earthworms compared to a control plot which was not treated with any of compounds (a) and (b) but otherwise submitted to identical treatment.

3. The process of claim 1 or 2 wherein the one or more nitrification inhibiting compounds (b) are applied in an amount:
a) such that the ratio (w/w) of "total protectable nitrogen" over "sulfur from compounds (b)" is at most about 8:1, preferably at most about 7.5:1, more preferably at most about 7:1; and
b) corresponding to a soil level of S (sulfur) that is at least about 50 ppm, preferably at least about 75 ppm, more preferably at least about 100 ppm;
preferably wherein the nitrification rate is reduced by at least about 70% or more, preferably by at least about 80% or more, more preferably by at least about 90% or more, most preferably for completely inhibiting nitrification activity, compared to a control without nitrification inhibitors.

4. The process of any one of claims 1 to 3 wherein the ammonium-containing fertilizers (al) and/or the ammonium-producing fertilizers (a2) are applied to the soil and/or foliage in solution with the one or more nitrification inhibiting compounds (b).

5. The process of any one of claims 1 to 3 wherein the ammonium-containing fertilizers (a1) and/or the ammonium-producing fertilizers (a2) are applied to the soil and/or foliage in the form of a homogeneous solid mixture with the one or more nitrification inhibiting compounds (b);
preferably wherein the ammonium-containing fertilizers (a1) and/or ammonium-producing fertilizers (a2) and the nitrification inhibiting compounds (b) are applied to the soil and/or foliage in the form of a granule or prill containing the ammonium-containing fertilizers (al) and/or the ammonium-producing fertilizers (a2) and the nitrification inhibiting compounds (b);
more preferably wherein the ammonium-producing fertilizers (a2) comprises urea and the nitrification inhibiting compounds (b) are present in a coating around a urea granule or prill.

6. The process of any one of claims 1 to 5 wherein the nitrification inhibiting compound (b) is a polysulfide salt; preferably a calcium polysulfide; and/or
wherein the nitrification inhibiting compound (b) is a thiosulfate salt, preferably an ammonium thiosulfate and/or potassium thiosulfate and/or calcium thiosulfate; and/or
wherein the nitrification inhibiting compound (b) is a hydrogen sulfide salt such as NaHS.

7. The process of any one of claims 1 to 6, wherein the ratio of "Total protectable nitrogen" over "sulfur from compounds (b)" is from 1.5:1 to about 6:1, more preferably from about 2:1 to about 5:1; and/or
wherein the fertilizer (a) is selected from the group consisting of urea, UAN (urea ammonium nitrate), ammonium hydroxide, ammonium nitrate, ammonium sulfate, anhydrous ammonia, or mixtures thereof.

8. A protected fertilizer composition (I) that comprises:
a) One or more ammonium-containing fertilizers (a1) and/or one or more ammonium-producing fertilizers (a2);
b) One or more nitrification inhibiting compounds (b) that are selected from the group consisting of (b1) polysulfides and/or (b2) thiosulfates and/or (b3) hydrosulfides;
c) Wherein the ratio of "Total protectable nitrogen" over "sulfur from compounds (b)" is at most about 8:1, preferably at most about 7.5:1; more preferably at most about 7:1;
d) Wherein the amount of nitrification inhibiting compounds (b) is at least about 13 wt%; wherein the amount of fertilizers (a) preferably is at least about 40 wt%, this relative to the total weight the composition, including water;
preferably wherein the fertilizer composition (I) is an aqueous composition (I), or wherein the fertilizer composition (I) is in solid form;
more preferably wherein the fertilizer composition (I) is in solid form and compounds (a) and (b) are homogeneously spread over a granule and/or a prill; most preferably wherein the fertilizer composition (I) comprises additional compounds (b) present in a coating around the granule and/or prill.

9. The fertilizer composition of claim 8 comprising at least one nitrification inhibitor (c1) and/or at least one urease inhibitor (c2) that is different from compounds (b).

10. The fertilizer composition of claim 9 comprising at least one nitrification inhibitor (c1), preferably comprising at least one nitrification inhibitor (c1) which is DCD, wherein the ratio (w/w) of the amount of sulfur (S) from compounds (b) to DCD is in the range of 5:1 to 40:1, preferably in the range of 15:1 to 25:1, and wherein optionally the amount of nitrification inhibitors (c1) is less than 0.3 wt.%, preferably less than 0.1 wt.%, more preferably less than 0.04 wt.%, most preferably less than 0.02 wt.%.

11. The fertilizer composition of claim 8 comprising no nitrification inhibitors (c1) different from compounds (b).

12. The use of one or more compounds (b) that are selected from the group consisting of (b1) polysulfides and/or (b2) thiosulfates and/or (b3) hydrosulfides as a nitrification inhibitor wherein the soil health, preferably the soil microbiome health is maintained or not significantly negatively influenced; preferably wherein the use is on fields where wheat, vegetables, fruits, nut crops or turfgrass grow;
preferably wherein the use is for reducing the nitrification rate by at least about 70% or more, optionally by at least about 80% or more, optionally by at least about 90% or more, optionally for completely inhibiting nitrification activity, compared to a control without nitrification inhibitors;
more preferably wherein the one or more compounds (b) is selected from the group consisting of thiosulfates, optionally selected from the group consisting of ammonium thiosulfate, calcium thiosulfate, potassium thiosulfate and combinations thereof.

13. The use of claim 12 wherein:
a) The total microbial biomass as determined 6 weeks after application of the compounds (b) to the soil and/or the foliage is maintained or not significantly negatively influenced, preferably the total microbial biomass as determined 6 weeks after application of the compounds (b) is more than 70%, preferably more than 80%, more preferably more than 90% of the total microbial biomass compared to a control plot which was not treated with any of compounds (a) and (b) but otherwise submitted to identical treatment; and/or
b) The total amount of active urease enzyme as determined 6 weeks after application of the compounds (b) to the soil and/or the foliage is maintained or not significantly negatively influenced, preferably the total amount of active urease enzyme as determined 6 weeks after application of the compounds (b) is more than 70%, preferably more than 80%, more preferably more than 90% of the total amount of active urease enzyme compared to a control plot which was not treated with any of compounds (a) and (b) but otherwise submitted to identical treatment; and/or
c) The total number of earthworms is maintained or not significantly negatively influenced, preferably total number of earthworms as determined 6 weeks after application of the compounds (b) is more than 70%, preferably more than 80%, more preferably more than 90% of the total number of earthworms compared to a control plot which was not treated with any of compounds (a) and (b) but otherwise submitted to identical treatment.

14. The use of claim 12 or 13 for inhibiting, at least in part, nitrification activity of ammonium-containing fertilizers (a1) and/or of ammonium-producing fertilizers (a2), wherein said use comprises
a) Applying to soil and/or to foliage a nitrification inhibitory amount of one or more compounds (b) that are selected from the group consisting of (b1) polysulfides and/or (b2) thiosulfates and/or (b3) hydrosulfides, preferably selected from the group consisting of thiosulfates, preferably selected from the group consisting of ammonium thiosulfate, calcium thiosulfate, potassium thiosulfate and combinations thereof;
b) Wherein the one or more compounds (b) are applied simultaneously with, before or after the fertilizers (a) are applied to the soil and/or to the foliage such that the compounds (b) are in direct contact with the ammonium-containing fertilizers (a1) and/or the ammonium-producing fertilizers (a2);
c) Wherein the one or more nitrification inhibiting compounds (b) are applied in an amount:
i. such that the ratio (w/w) of "total protectable nitrogen" over "sulfur from compounds (b)" is at most about 8:1, preferably at most about 7.5:1, more preferably at most about 7:1, and/or
ii. corresponding to a soil level of S (sulfur) that is at least about 50 ppm, preferably at least about 75 ppm, more preferably at least about 100 ppm;
and
d) Wherein compounds (b) are different from compounds (a).

15. The use of claim 12 further comprising the use:
a) To improve nitrogen use efficiency (NUE) by at least 5, 10, 15 or 20%,
b) To slow down the nitrification process in soils,
c) To inhibit the first steps of the nitrification process whereby ammonium nitrogen is converted to nitrite nitrogen,
d) To keep the nitrite level in the soil below a level that is phytotoxic,
e) To provide nitrification inhibition in ecologically fragile soils,
f) To reduce the amount of commercial nitrification inhibitors like DCD and nitrapyrin.
